# EUROPÄISCHE PATENTSCHRIFT

(11) **EP 1 379 193 B1**
(45) Veröffentlichungstag und Bekanntmachung des Hinweises auf die Patenterteilung: **21.02.2007**
(21) Anmeldenummer: 02715346.9
(22) Anmeldetag: 25.01.2002
(51) Int. Cl.: A61C 7/12, A61C 7/14, A61C 7/08

(54) **VORRICHTUNG FÜR DIE ORTHODONTIE**
ORTHODONTIC APPLIANCE
DISPOSITIF D'ORTHODONTIE

(30) Priorität: 26.01.2001 EP 01810080
(43) Veröffentlichungstag der Anmeldung: 14.01.2004
(73) Patentinhaber: Schaulin AG, 3008 Bern (CH)
(72) Erfinder: SCHAULIN, Michael, CH-3012 Bern (CH)
(74) Vertreter: Roshardt, Werner Alfred
(86) Internationale Anmeldenummer: PCT/CH2002/000041
(87) Internationale Veröffentlichungsnummer: WO 2002/058584

(56) Entgegenhaltungen:
- US-A- 2 908 974
- US-A- 3 946 488
- US-A- 4 249 897
- US-A- 4 487 581
- US-A- 4 669 980
- US-A- 5 302 121
- US-A- 5 823 771
- US-A- 5 913 680

## Beschreibung

### Technisches Gebiet

Die Erfindung betrifft eine Vorrichtung für die Orthodontie mit zumindest einem Mittel zur Korrektur, einem Anschlusselement und einer Halterung.

### Stand der Technik

In der Kieferorthopädie werden einerseits abnehmbare und andererseits festsitzende Apparaturen eingesetzt. In der Orthodontie werden hauptsächlich festsitzende Apparaturen zum Korrigieren von Zahnfehlstellungen, beziehungsweise Gebissanomalien verwendet. Beispielsweise werden auf mehreren Zähnen so genannte Brackets befestigt und mittels Ligaturen mit einem Korrekturbogen verbunden. Eine auf diese Weise auf die Zähne ausgeübte Kraft führt über längere Zeit zu einer Verschiebung beziehungsweise Veränderung der Zahnstellung, sei es zur Verbesserung der Okklusion oder zur Verschönerung des Gebisses.

Die bei dieser Methode verwendeten Brackets sind im Prinzip kleine Plättchen, welche auf ihrer Oberseite Befestigungselemente aufweisen. Diese Befestigungselemente sind so platziert, dass ein horizontaler Schlitz frei bleibt, welcher einen Korrekturbogen aufnehmen kann. Um den Anforderungen an die hohe Präzision zu genügen, bestehen die Brackets meist aus Metall.

Die Verbindung zwischen dem Korrekturbogen und den Brackets wird durch die so genannte Ligatur geschaffen. Es handelt sich dabei z. B. um einen Metalldraht, welcher in geeigneter Weise um die Befestigungselemente der Brackets und den Korrekturbogen geschlungen wird, um eine feste Verbindung zwischen Bracket und Korrekturbogen zu schaffen, zur Übertragung der Kraft des Korrekturbogens auf das Bracket respektive auf den Zahn. Die US 5,044,945 (Peterson) zeigt in einer Variante dazu ein Bracket, bei welchem der zu fixierende Draht in einem Schlitz eingeklemmt wird.

In der US 3,438,132 (Rubin) wird ein zweiteiliges Bracket gezeigt, welches einen Clip und einen Block umfasst, welcher im Clip eingeschnappt wird. Der Block ist mit einem Schlitz versehen, in welchem der Korrekturbogen aufgenommen und arretiert wird. Durch die Ausgestaltung des Schlitzes im Block können verschiedene Korrekturen der Zahnfehlstellungen vorgenommen werden, wie beispielsweise Drehung um die vertikale Achse, Aufrichten oder Kippen und Verdrehen des Zahns.

Ein weiteres Beispiel ist in der US 4,487,581 A (Adler) gezeigt, in welcher ein Bracket eine Basis und einen Block umfasst, wobei die Basis entweder mit einem Kleber oder einem Zahnband am Zahn befestigt ist. Der Block weist an seiner Vorderseite einen Schlitz zur Aufnahme eines Bogendrahtes für verschiedene Korrekturen auf. Die Basis umfasst ein Paar gegenüberliegende Vorsprünge, welche den Block an der Basis halten, wobei der Block direkt von vorne in die Basis eingesetzt wird. Die Vorsprünge haben an ihren Enden Haken, um ein elastisches Mittel (Gummiband) anzubringen, welches die Vorsprünge zusammendrückt und den Block sichert. Verschiedene Blöcke können während der Behandlung an ein und derselben Basis von einem Spezialisten ausgetauscht werden. Der Korrekturdraht wird mit einem Gummiband am Bracket gehalten.

Das in der US 2,908,974 A (Stifter) gezeigte Bracket besteht aus einem standardisierten Verankerungselement und aus auswechselbaren, je nach Anwendung ausgebildeten Sockeln. Die Halterung wird an einem Zahnband befestigt und weist vorstehende Wände auf, welche eine schwalbenschwanzförmige Tasche bilden. An den äusseren Enden der Wände befinden sich hakenförmige Elemente. Das Anschlusselement ist komplementär zur Halterung ausgebildet und wird seitlich in die Halterung eingeschoben, wobei das Anschlusselement durch Friktion an der Halterung gehalten ist. Das Anschlusselement weist einen Schlitz zur Aufnahme des Bogendrahtes auf, welcher mit einer um die Haken der Halterung gewickelten Ligatur fixiert wird.

Die US 5,302,121 A (Gagin) zeigt ein Bracket, in welchem ein Draht sich in drei Dimensionen bewegen und mit geringer Reibung gleiten kann. Die Vorrichtung umfasst ein Gehäuse zur Aufnahme eines Teils bzw. eines Balls. An den Seitenwänden sind Vorsprünge für die Ligatur angeordnet, welche den Bogendraht hält, der durch den Schlitz im Ball geführt ist. Das Gehäuse ist aus einem verformbaren Material hergestellt, so dass der Ball in die Aufnahme auswechselbar einschnappen kann. Alternativ kann mit einer Ligatur der Bogendraht am Bracket fixiert werden. Das Gehäuse und/oder der Ball können z. B. mit magnetischem Material versetzt werden, damit eine magnetische abstossende Kraft auf den Bogendraht wirkt und das Gleiten im Gehäuse bzw. im Ball mit geringer Reibung erleichtert.

Das Bracket, welches in der US 3,854,207 (Wildman) gezeigt ist, weist als eine Variante zu anderen bekannten Verfahren zwei oder mehr parallele Schlitze auf. Mit einem rechtwinklig zu den Schlitzen angeordneten U-förmigen Clip werden in den Schlitzen angeordnete Drähte fixiert.

In der US 3,946,488 A (Miller et al.) ist eine Vorrichtung beschrieben, welche ein Halteteil und ein in das Halteteil seitlich einschiebbares Bracket umfasst, wobei das Halteteil direkt am Zahn oder an einem Zahnband befestigt wird. Alle Teile sind aus einem starken, widerstandsfähigen Material hergestellt, wie z. B. aus rostfreiem Stahl oder aus einem geeigneten Kunststoff. Mit einer Ligatur ist ein Bogendraht in einer Vertiefung des Brackets gehalten. Der Bogendraht ist nur in einem Schlitz eines Anschlusselementes geführt und wird mit einem weiteren Hilfsmittel (Gummiband, Ligatur) am Anschlusselement befestigt. Das Anschlusselement muss seitlich bzw. von oben oder unten eingeschoben werden.

Die in der US 5,823,771 A (Nord) beschriebene Vorrichtung umfasst eine fixe Basis und auswechselbare Befestigungselemente, welche entsprechend den benötigten Korrekturen angeordnet werden. Bei einem Wechsel der Korrekturart wird das Befestigungselement mit einem entsprechenden Ankerkopf ausgewechselt; eine Basis bleibt bei allen Korrekturen unveränderlich. Die Basis wird an eine Zahnoberfläche geklebt. Durch einen Schlitz im Ankerkopf wird ein Draht gehalten bzw. geführt. Das Befestigungselement weist einen Schaft auf, mit dem es in eine Öffnung der Basis eingesteckt wird, wobei der Schaft dann in einer Öffnung klemmt. Das Befestigungselement wird bei zu grosser Krafteinwirkung auf den Ankerkopf aus der Basis herausgezogen. Am Befestigungselement sind hakenförmige Ausbildungen angeordnet, welche eine Verschnürung mit elastischen Bändern ermöglichen. Das Anschlusselement muss von oben bzw. unten eingeschoben werden und ist nicht auswechselbar.

Die in der US 4,669,980 A (Degnan) beschriebene Vorrichtung umfasst ein kanalförmiges Bracket, eine röhrenförmige Halterung, ein zusätzliches röhrenförmiges Anschlusselement und einen Bogendraht. Die Halterung ist mit einer Basis an einer Zahnoberfläche befestigt [z. B. angeklebt] und weist zwei Hülsen auf. Das Anschlusselement besteht aus zwei Stangen, welche beim Zusammensetzen der Vorrichtung in die Hülsen der Halterung eindringen und über einen Metallsteg miteinander verbunden sind. Das Anschlusselement hat horizontal angeordnete Röhren, durch welche der Bogendraht geführt ist. Der Bogendraht kann derart ausgebildet werden, dass er ohne ein Anschlusselement in der Halterung befestigt werden kann. Die Einheiten der Vorrichtung sind aus Metall, können aber auch aus anderen Materialien wie Kunststoff, Keramik oder Kombinationen hergestellt sein. Der Bogendraht wird nur in einem Durchgang des Anschlusselementes geführt und nur an seinen Enden fixiert. Das Anschlusselement muss von oben bzw. unten eingeschoben werden.

Die in der US 4,249,897 A (Anderson) beschriebene Vorrichtung hat austauschbare Brackets aus Materialien mit unterschiedlicher elastischer Steifigkeit. Jedes Bracket besteht aus einem äusseren und einem inneren Bracket-Element. Das bevorzugt standardisierte und z. B. aus rostfreiem Stahl hergestellte äussere Bracket-Element hat eine flache Basis und zwei voneinander beabstandete Vorsprünge, welche an von einem Schlitz beabstandete, rückgebogene Enden aufweisen. An den Enden werden eine Ligatur oder Verankerungsmittel zur Fixierung eines Bogendrahts befestigt. Im Wesentlichen entspricht die Vorrichtung einem konventionellen Standard-Zwillings-Bracket, welches an einem Zahnband oder direkt am Zahn befestigt ist. Das modulare Bracket-Element wird in das äussere Bracket-Element eingesetzt und ist an diesem mit einem lösbaren Einschnappmechanismus gehalten. Die inneren Bracket-Elemente sind entsprechend ihrer Anwendung unterschiedlich ausgebildet. Das Anschlusselement ist lösbar an einer annähernd U-förmig ausgebildeten Halterung fixiert. Der Bogendraht ist nur im Schlitz des Anschlusselementes geführt und wird mit einem weiteren Hilfsmittel (Gummiband, Ligatur) an der Halterung befestigt.

Bei den bekannten Systemen handelt es sich um Brackets bzw. Speziallösungen, mit welchen meist nur eine oder eine beschränkte Anzahl von Korrekturen der Zahnfehlstellungen durchgeführt werden kann. Weiter müssen bei den bekannten Vorrichtungen die meisten Konstruktionen und Anpassungen durch einen Zahntechniker erstellt werden und können nur bei festsitzenden Apparaturen durch einen Zahnarzt selbst direkt am Patienten vorgenommen werden.

### Darstellung der Erfindung

Aufgabe der Erfindung ist es, eine Vorrichtung zu schaffen, welche modular aufgebaut ist und verschiedene Korrekturen und Anwendungen der Orthodontie ermöglicht, wobei die durch die Vorrichtung geschaffene Apparatur, gegebenenfalls durch den Patienten, herausnehmbar und wieder einsetzbar ist.

Die Lösung der Aufgabe ist durch die Merkmale des Anspruchs 1 definiert. Gemäss der Erfindung besteht die Vorrichtung aus zumindest einem Mittel zur Korrektur, einem Anschlusselement und einer Halterung. Das Mittel zur Korrektur ist am Anschlusselement gehalten.
Das Anschlusselement seinerseits wird an der Halterung fixiert.

Bei der Verwendung eines Bogendrahtes oder einzelner Verbindungen zwischen den Anschlusselementen als Mittel zur Korrektur kann bei starken Anomalien eine derart grosse Spannkraft auf das Anschlusselement wirken, dass die Klemmwirkung zwischen dem Anschlusselement und der Halterung nicht ausreicht, um die Vorrichtung in der gewünschten Position zu halten. Weiter kann unter Umständen die anomale Zahnstellung derart gross sein, dass einzelne Anschlusselemente nur beschränkt in die Halterung eingesetzt werden können, beziehungsweise die Klemmwirkung der Halterung zu schwach ist. Damit auch bei solchen erschwerten Bedingungen das zumindest teilweise in der Halterung fixierte Anschlusselement sicher gehalten ist, wird ein Abdeckelement über das Anschlusselement und die Halterung angeordnet. Das Abdeckelement ist bevorzugt als eine Klemme ausgebildet, welche das in der Halterung zumindest teilweise fixierte Anschlusselement zusätzlich sichert.

Durch diese Vorrichtung wird ferner ein modulares System geschaffen, welches mit einzelnen verschiedenen Komponenten die meisten Anwendungen in der Orthodontie ermöglicht. Im Gegensatz zu den bekannten Lösungen mit Brackets wird das Mittel zur Korrektur bei der Erfindung am Anschlusselement fixiert. Bei den bekannten Brackets muss der Draht dagegen in der Führung gleiten können, um seine Funktion auszuüben. Eine eigentliche Fixierung des Mittels zur Korrektur ist dem Stand der Technik fremd.

Es handelt sich bei der erfindungsgemässen Vorrichtung um eine so genannte bedingt abnehmbare Apparatur. Bedingt abnehmbar bedeutet, dass sämtliche Mittel zur Korrektur angeordnet werden können, wie sie bei festsitzenden Apparaturen Anwendung finden, diese jedoch beispielsweise für die Reinigung entfernt und wieder eingesetzt werden können. Nicht nur der Zahnarzt, sondern auch der Patient kann, nach entsprechender Instruktion, die Vorrichtung selbst entfernen und wieder einsetzen. Somit kann das Mittel zur Korrektur und auch die durch dieses Mittel abgedeckte Zahnoberfläche zwischendurch gereinigt werden. Zahnschäden infolge mangelnder Möglichkeiten für eine Reinigung werden gegenüber den bisher verwendeten Vorrichtungen auf ein Minimum reduziert. Durch die einfache Handhabung der erfindungsgemässen Vorrichtung wird der Zeitaufwand zur Befestigung dieser durch den Zahnarzt beziehungsweise Kieferorthopäden gegenüber den bekannten Lösungen wesentlich reduziert, was zu einer Kostensenkung für jeden einzelnen Patienten und das Gesundheitswesen führt.

Die Halterung kann lateral (lingual/palatinal bzw. buccal) an jedem Zahn befestigt werden. Das Mittel zur Korrektur ist am Anschlusselement derart gehalten, dass es beispielsweise auch nach der Fixierung des Anschlusselements an der Halterung montiert werden kann. Bei einer nachträglichen Montage des Mittels zur Korrektur kann das Anschlusselement an der Halterung fixiert bleiben. Weiter ist ein beschädigtes Mittel zur Korrektur auswechselbar. Mit dieser erfindungsgemässen Vorrichtung ist beispielsweise auch eine stufenweise Korrektur der zu korrigierenden Zähne möglich. So kann das Mittel der Korrektur, beispielsweise ein Labialbogen, zu richtende Schneidezähne mit einer Kraft belasten, welche nur für einen Teil der Korrektur ausreicht. Ist dieser Zwischenschritt erreicht, wird der Labialbogen entfernt, nachgerichtet und wieder an den Anschlusselementen befestigt oder durch einen neuen, entsprechend der nun vorliegenden Zahnstellung angepassten Labialbogen ersetzt.

In einer bevorzugten Ausführungsform der erfindungsgemässen Vorrichtung hat diese mehrere Mittel zur Korrektur, mehrere Anschlusselemente und mehrere Halterungen. Auch bei dieser Ausführungsform sind die Mittel zur Korrektur an den Anschlusselementen gehalten und die Anschlusselemente ihrerseits sind an den Halterungen fixierbar.

Beispielsweise ist das Mittel zur Korrektur kein durchlaufender Bogendraht, sondern es handelt sich um einzelne Drahtabschnitte, welche in Form einer Schlaufe oder eines "Loops" an den Anschlusselementen befestigt sind und jedes benachbarte Anschlusselement miteinander verbinden. Die Mehrzahl der Schlaufen schafft in Verbindung mit den Anschlusselementen eine funktionelle Einheit, welche durch den Zahnarzt, den Kieferorthopäden oder durch den Patienten selbst in die Halterungen gesteckt und wieder entfernt werden kann. Die Anschlusselemente werden von den Schlaufen kettenartig verbunden. Die einzelnen Schlaufen werden an einem Setup meist von Molar bis Molar angepasst und beispielsweise an den in den Halterungen eingesteckten Anschlusselementen verschweisst, festgeklemmt oder angeleimt. Ist der aus den einzelnen Schlaufen und Anschlusselementen zusammengesetzte Korrekturbogen erstellt, wird dieser in die zuvor befestigten Halterungen im Mund des Patienten durch den Zahnarzt oder Kieferorthopäden eingeklickt. Das Mittel zur Korrektur - hier der aus Einzelteilen zusammengesetzte Korrekturbogen - entwickelt danach seine volle Spannkraft und leitet die gewünschte Korrekturbewegung an den entsprechenden Zähnen ein.

Anstelle von Schlaufen oder "Loops" können die einzelnen Anschlusselemente mit weitgehend geraden Verbindungsmitteln verbunden sein. Diese Verbindungsmittel weisen vorzugsweise eine Federwirkung auf, damit das Mittel zur Korrektur auf die ideale Stellung der Zähne angepasst wird und im befestigten Zustand im Mund des Patienten die benötigte Kraft zur Korrektur der anormalen Stellung der Zähne vornimmt.

Vorzugsweise ist das Anschlusselement lösbar an der Halterung fixiert. So ist bei der Vorrichtung nicht nur das Mittel zur Korrektur, sondern auch das Anschlusselement bei Bedarf auswechselbar. Einerseits kann ein beschädigtes Anschlusselement ersetzt werden, ohne dass die ganze Vorrichtung ausgewechselt werden muss. Andererseits kann je nach Anwendung, beispielsweise wenn nach einer gewissen Zeit mehr als ein Mittel zur Korrektur an einem Anschlusselement gehalten wird, das entsprechend ausgebildete Anschlusselement eingesetzt werden.

In einer Variante dazu wird das Anschlusselement zwar in der Halterung eingeschnappt, aber die Verbindung kann nicht ohne eine Beschädigung der Halterung und/oder des Anschlusselements gelöst werden.

Vorzugsweise ist das Anschlusselement formschlüssig an der Halterung fixiert, wobei die Fixierung mit einer Klemmvorrichtung bevorzugt ist. Die formschlüssige Fixierung hat den Vorteil, dass sie mit einfachen Mitteln wieder gelöst werden kann. Beispielsweise ist das Anschlusselement in der Halterung eingeschnappt. Dazu wird das Anschlusselement in die Halterung hineingedrückt. Die Halterung weist einen Bereich im Querschnitt auf, welcher kleiner als die entsprechende Aussenabmessung des Anschlusselements ausgebildet ist. Sobald dieser Bereich bei der Montage des Anschlusselements überwunden wurde, ist das Anschlusselement fixiert. In einer Variante dazu, kann das Anschlusselement ein Spreizmittel, beispielsweise eine Schraube aufweisen. Nachdem das Anschlusselement in der Halterung eingesetzt ist, wird der Schraubenkopf betätigt. Die Schraube spreizt das Anschlusselement, wie bei einem Dübel, auseinander, worauf das Anschlusselement mit der Halterung verkeilt wird. Durch eine konische Ausbildung der Querschnittsform der Halterung kann die Wirkung der Klemmkraft und somit die Fixierung verstärkt werden.

Für die bevorzugte Art der Montage mit einem so genannten Einschnappmechanismus (engl. = snap-in mechanism) weist die Halterung einen im Wesentlichen U-förmigen Querschnitt auf und ist kanalförmig ausgebildet. Die Halterung umfasst eine Basis und zwei, gegenüberliegende Seitenwände, welche bevorzugt senkrecht zur Basis stehen. Diese Ausgestaltung der Halterung kann als Clip bezeichnet werden. Durch den U-förmige Querschnitt ist eine Aufnahme für das Anschlusselement geschaffen, in welcher das Anschlusselement fixiert werden kann. Die Seitenwände können auch gegeneinander geneigt angeordnet werden. Sie bilden mit der Basis in dieser Ausführungsvariante einen spitzen Winkel, d. h. einen Winkel < 90°. Das Anschlusselement weist vorzugsweise eine konische Form im Bereich auf, welcher in der Halterung eingesetzt wird, wodurch das Anschlusselement formschlüssig gehalten ist.

Bevorzugt wird die Halterung aus einem Werkstück hergestellt. Die Halterung kann auch aus Einzelteilen, beispielsweise einer separat hergestellten Basis und separat hergestellten Seitenwänden gefertigt werden. Die Einzelteile können miteinander verklebt, geschweisst oder gelötet sein. Mit einer Herstellung der Halterung aus Einzelteilen ist es möglich, auch verschiedene Materialien miteinander zu kombinieren und damit leichter spezielle Anforderungen (bspw. Ästhetik, besondere Funktionen, etc.) zu berücksichtigen.

In einer Variante zur U-förmigen Ausgestaltung der Halterung kann die Halterung nur eine Basis und einen Steg aufweisen. Der Steg steht bevorzugt senkrecht auf der Basis und ist beispielsweise in der Mitte der Querrichtung der Basis angeordnet. Vorzugsweise verläuft der Steg über die ganze Länge der Basis. Das Anschlusselement weist einen entsprechend des Querschnitts des Stegs ausgebildeten Schlitz auf. Das Anschlusselement kann mit einer oder mehreren senkrecht zum Schlitz verlaufenden Bohrungen versehen sein. Im Steg sind auch Bohrungen angeordnet, welche mit den Bohrungen des Anschlusselements übereinstimmen, wenn dieses an der Halterung aufgeschoben wird. Durch Stifte, Bolzen oder einem vergleichbaren Mittel kann das Anschlusselement an der Halterung fixiert werden.

Ist die Halterung im Wesentlichen U-förmig ausgebildet, umfasst das zusätzlich angeordnete Abdeckelement vorzugsweise die Seitenwände der Halterung. Das Abdeckelement ist dementsprechend auf die Halterung abgestimmt und weist in dieser Ausführungsform ebenfalls eine U-förmige Ausgestaltung auf, so dass das Abdeckelement über die Halterung gestülpt werden kann.

Neben der Verbesserung der Klemmwirkung beziehungsweise der Verankerung des Anschlusselements in der Halterung durch das Abdeckelement kann dieses auch aus ästhetischen Gründen vorgesehen werden. Ist die erfindungsgemässe Vorrichtung vestibulär an den Zähnen befestigt, können zumindest die Anschlusselemente und die Halterungen mit einem auf die Farbe der Zähne des Patienten farblich abgestimmten Abdeckelement abgedeckt werden, welches beispielsweise eine entsprechende Beschichtung aufweist. Das Abdeckelement kann auch aus einem zahnfarbenen Material (z. B. Kunststoff) hergestellt sein, welches die an ein solches Abdeckelement gestellten Anforderungen erfüllt. Die gesamte, mit solchen Abdeckelementen versehene und vestibulär angeordnete Vorrichtung sticht einem Dritten weniger ins Auge als es bei einer herkömmlichen Lösung der Fall ist. Dies kann für die psychische Entwicklung insbesondere von Teenagern von grosser Bedeutung sein.

Bei einer weiteren bevorzugten Ausführungsform zur Verbesserung der formschlüssigen Verbindung zwischen der Halterung und dem Anschlusselement weist zumindest eine Seitenwand eine Ausbuchtung auf, welche mit einem entsprechend dieser Ausbuchtung ausgebildeten Mittel des Anschlusselements zusammenwirkt. Bevorzugt ist ein Vorsprung an der Seitenwand gegen die gegenüberliegende Seitenwand ausgerichtet und greift in eine Vertiefung am Anschlusselement ein. Vorzugsweise weisen beide Seitenwände jeweils gegeneinander gerichtete Vorsprünge auf. Besonders vorteilhaft ist es, wenn die Vorsprünge an den Seitenwände derart angeordnet sind, dass in diesem Bereich eine wesentliche Querschnittverjüngung der Halterung vorhanden ist. Das Anschlusselement weist vorzugsweise - insbesondere im Bereich, welcher in die Halterung eingesetzt wird - Aussenabmessungen auf, welche weitgehend den Innenabmessungen des Querschnitts der Halterung entsprechen. Das Anschlusselement ist mit Vertiefungen versehen, in welchen die Vorsprünge der Seitenwände eingreifen können. Wird nun das Anschlusselement in die Halterung eingesetzt, werden die Seitenwände infolge den Vorsprüngen auseinandergedrückt. Sobald die Vorsprünge mit den Vertiefungen lagenmässig übereinstimmen, schnappen die Vorsprünge in den Vertiefungen ein und halten das eingesetzte Anschlusselement formschlüssig. Auch bei dieser beschriebenen Ausführungsform können Abdeckelemente zur zusätzlichen Verbesserung der formschlüssigen Verbindung zwischen den Anschlusselementen und den Halterungen oder aus ästhetischen Gründen vorgesehen werden.

Vorzugsweise verlaufen die Vorsprünge an den Seitenwänden über die ganze Länge der Halterung und an den Anschlusselementen werden entsprechend den Vorsprüngen über die ganze Länge des Anschlusselements Nuten angeordnet. Vorteilhaft weisen die Vorsprünge an den Seitenwänden eine kreisbogenförmige, konvexe Ausgestaltung auf. Die Nuten am Anschlusselement haben entsprechend eine kreisbogenförmige, konkave Ausgestaltung. Der Vorsprung kann auch anders ausgestaltet sein, beispielsweise einen dreieckigen Querschnitt aufweisen. Die mit dem Vorsprung zusammenwirkende Nut weist vorteilhaft eine dem Vorsprung entsprechend ausgebildete Negativform auf. Die Vorsprünge können in einer Variante oder als Ergänzung zur bevorzugten Ausführungsform als Nocken ausgebildet sein, welche in entsprechend der Lage der Vorsprünge angeordneten, beispielsweise kegelförmigen Vertiefungen an den Anschlusselementen eingreifen.

Die Vorsprünge, beziehungsweise die Ausbuchtungen an den Seitenwänden können auch nach aussen gerichtet sein. Das Anschlusselement weist in einer solchen Ausführung entsprechend ausgebildete, konkave Vorsprünge auf. Auch hier werden die zusammenwirkenden Mittel vorzugsweise über die ganze Länge der Halterung beziehungsweise des Anschlusselements geführt. Weiter können die freien Enden der Seitenwände zum Querschnitt der Halterung hin umgebogen werden. Das Anschlusselement weist entsprechend bei dieser Ausführung komplementäre Vertiefungen auf. Entspricht die Höhe des Anschlusselements der Höhe der Seitenwände der Halterung, sind keine Vertiefungen am Anschlusselement nötig. Das Anschlusselement wird von den umgebogenen, freien Enden der Seitenwände umfasst und somit sicher gehalten.

Die Vorsprünge an den Seitenwänden der Halterung - oder am Anschlusselement - sind vorzugsweise aus dem gleichen Material wie die Halterung hergestellt und werden direkt beim Herstellungsprozess der Halterung ausgeformt. Sie können auch nachträglich an den Seitenwänden aufgeschweisst oder aufgelötet werden.

Die Halterung wird vorzugsweise durch spezielle Klebetechniken mit der Oberfläche des Zahnes verklebt. Die Halterung kann lingual, bzw. palatinal oder buccal am Zahn befestigt werden. Zur Befestigung wird eine Seite, vorzugsweise die Basis mit einem adhäsiven Mittel versehen und die Halterung wird direkt auf den Zahn geklebt. Im Handel sind unterschiedliche Mittel erhältlich, welche beispielsweise je nach Ort der Befestigung, Dauer der Befestigung und Art des Speichels entsprechende Eigenschaften aufweisen. Die Zahnoberfläche kann zur Erhöhung der adhäsiven Wirkung vorbehandelt werden, beispielsweise mit der Säure-Ätz-Technik (SÄT). Mit den heute auf dem Markt erhältlichen Klebemitteln kann die sichere Befestigung der Halterungen an den Zähnen gewährleistet und bleibende Verfärbungen an der Zahnoberfläche weitgehend vermieden werden. Bei einer lingualen oder palatinalen Anordnung der erfindungsgemässen Vorrichtung an den zu korrigierenden Zähnen ist die Vorrichtung von vorne nicht sichtbar. Sie bietet somit eine Alternative in der Erwachsenenbehandlung gegenüber den bekannten Lösungen.

In einer Variante wird die Halterung nicht direkt auf dem Zahn, sondern an einem so genannten Zahnband angeordnet. Dieses wird in der bekannten Art montiert. Das Zahnband kann auf einzelnen oder allen Zähnen angebracht werden. Die Halterung wird auf das Zahnband aufgeklebt oder je nach Material der Halterung und des Zahnbands auf diesem aufgelötet, beziehungsweise aufgeschweisst.

Anstelle eines Anschlusselements ist in einer Variante der erfindungsgemässen Vorrichtung in einem ersten Behandlungsschritt ein sogenanntes Übertragungselement an der Halterung fixiert. Das Übertragungselement zur Verwendung in der erfindungsgemässen Vorrichtung weist im Wesentlichen einen Kopplungsbereich, welcher entsprechend einem Anschlusselement zur Befestigung eines Mittels zur Korrektur ausgebildet ist, und einen Haftungsbereich auf, welcher als Kontakt- und Haftungsfläche für die Übertragungshilfe dient.

Mittels Positionierhilfen werden die Halterungen an den Zähnen befestigt und anschliessend die Übertragungselemente in diese eingesteckt. Mit einer Übertragungshilfe (z. B. Silicon) wird der Abdruck des Kiefers und der Zähne erstellt. Die Ausdehnung der Übertragungshilfe wird über die in den Halterungen eingesteckten Übertragungselemente geführt, so dass bei einer Entnahme der Übertragungshilfe aus dem Mund des Patienten die Übertragungselemente an der Übertragungshilfe verbleiben und somit aus den Halterungen entfernt werden. Im zahntechnischen Labor werden an die Kopplungsbereiche der Übertragungselemente erneut Halterungen aufgesteckt und anhand dieser Halterungen und der Ausformung der Übertragungshilfe das Modell (z. B. aus Gips) erstellt, welches die genaue Situation des Kiefers und Position sowie Ausrichtung der Zähne des Patienten wiedergibt. Durch die vorgängig nach einem bestimmten System versetzten Halterungen an den Zähnen des Patienten kann ein genaues Abbild erstellt werden. Anschliessend werden im Setup die benötigten Mittel zur Korrektur hergestellt und mit den dazugehörigen Anschlusselementen versehen. Der Zahnarzt setzt den aus dem zahntechnischen Labor erhaltenen Teil der erfindungsgemässen Vorrichtung in die für die Herstellung des Modells zuvor angeordneten und an den Zähnen des Patienten verbliebenen Halterungen mit wenigen Handgriffen ein. Das im Setup entspannte Mittel zur Korrektur entwickelt im Mund des Patienten seine volle Spannkraft und leitet die gewünschten Korrekturen ein.

Bei der erfindungsgemässen Vorrichtung werden bereits zu Beginn der Behandlung die benötigten Halterungen an den Zähnen befestigt und - wie ausgeführt wurde - für die Modell- und Setup-Herstellung verwendet. Die gleichen Halterungen werden weiter für die Befestigung der im Setup erstellten Mittel zur Korrektur verwendet. Die Zähnflächen des Patienten werden gegenüber den bekannten Lösungen weniger beansprucht, als wenn für die Übertragungshilfe und die Mittel der Korrektur verschiedene Halterungen mehrmals an der gleichen Zahnfläche befestigt und entfernt werden. Insbesondere zur besseren Haftung von an den Zahn angeklebten Halterungen wird die entsprechende Zahnoberfläche vorbehandelt (beispielsweise. geätzt). Dies kann längerfristig zu Schäden führen, welche ein grösseres Ausmass haben können als es bei einer Beibehaltung der zu korrigierenden Anomalie der Fall wäre.

Zur besseren Haftung der Übertragungshilfe an den Übertragungselementen kann die Kontaktfläche der Übertragungselemente oberflächenbehandelt sein, beispielsweise mit einer Lack-/Kleberschicht bestrichen oder sandgestrahlt. In einer Variante dazu können an der Kontaktfläche des Übertragungselements Vorsprünge vorgesehen werden, welche die Verankerung des Übertragungselements mit der Übertragungshilfe verbessern.

Infolge des Einsatzgebiets der erfindungsgemässen Vorrichtung in der Orthodontie weisen die Bestandteile der Vorrichtungen nur geringe Abmessungen, meistens im Milimeterbereich auf. Damit die Kontaktfläche zwischen der Halterung und dem Zahn, beziehungsweise dem Zahnband vergrössert wird, sind beispielsweise an der Basis Laschen angeordnet. Durch die so geschaffene grössere Kontaktfläche ist die Übertragung grösserer Kräfte möglich, als dies mit einer kleineren, nur auf die Grundfläche der Basis beschränkten Kontaktfläche möglich ist. Bei geringen Belastungen auf die Halterung, kann beispielsweise auch die Grundfläche der Basis - d. h. die Grundfläche ohne zusätzliche Anordnung von Laschen - als Kontaktfläche für eine sichere Befestigung ausreichend sein.

Die Laschen sind vorzugsweise in Längsrichtung der Halterung angeordnet. Wenn die Aufnahme für das Anschlusselement okklusal ausgerichtet sein soll, wird die Halterung vorzugsweise mit einer Seitenwand am Zahn, beziehungsweise am Zahnband befestigt. Bei einer solchen Anordnung der Halterung werden angeordnete Laschen an der Seitenwand vorgesehen, welche zur Befestigung vorgesehen ist. Diese Laschen werden vorzugsweise auch für die entsprechende Seitenwand in Längsrichtung der Halterung vorgesehen. Durch die okklusale Ausrichtung der Aufnahme der Halterung kann das Anschlusselement von oben - bei einer Befestigung an den Zähnen des Unterkiefers -, beziehungsweise von unten - bei einer Befestigung an den Zähnen des Oberkiefers - eingesetzt werden.

Vorzugsweise werden an der Basis der Halterung zwei Hakenteile angeordnet, an welchen beispielsweise eine Verschnürung angebracht werden kann. Die Hakenteile sind bevorzugt an den Längsenden der Basis angeordnet und stehen senkrecht zur Basis. Die Höhe des Hakenteils ist vorzugsweise kleiner oder gleich der Höhe der Seitenwände, bezogen auf die Basis. Dadurch ist eine flexible Verwendung der Halterung gegeben. In der bevorzugten Ausführungsform ist die Hakenform jeweils nach aussen gebogen und die Abrundung entspricht einem Halbkreis (etwa 180°). Das freie Ende des Hakens kann in Richtung des Zahns verlängert sein, womit eine sichere Befestigung beispielsweise einer Verschnürung gewährleistet wird. Trotz der Anordnung von Hakenteilen kann das Anschlusselement in der Halterung eingesetzt und fixiert werden. Wird die Anzahl der Hakenteile beispielsweise auf vier erhöht, kann an dieser Halterung mit einer Ligatur oder Ähnlichem in bekannter Art und Weise ein Mittel zur Korrektur befestigt werden.

In einer bevorzugten Ausführung der Halterung mit einer Kombination von Laschen (zur Vergrösserung der Kontaktfläche zwischen der Halterung und einem Zahn), sowie zwei Hakenteilen, werden die Hakenteile jeweils in der Mitte am freien Rand der Basis angeordnet. Die Breite der Hakenteile beträgt etwa ein Drittel der gesamten Breite der Basis, wobei sich die Grössenangaben auf den Querschnitt der Halterung beziehen. Links und rechts - bezogen auf den Querschnitt der Halterung - des Hakenteils sind jeweils zwei Laschen in der Verlängerung der Längsrichtung der Basis angeordnet.

Als Ausgangsmaterial für die Bestandteile der erfindungsgemässen Vorrichtung, insbesondere für die Halterung, das Anschlusselement und zumindest den Befestigungsteil des Mittels zur Korrektur, wird vorzugsweise ein korrosionsstabiles und bioverträgliches Metall verwendet. Metall hat den Vorteil, dass es insbesondere im Zusammenwirken der Halterung und des Anschlusselements positive Auswirkungen hat. Beispielsweise können die Seitenwände der Halterung an ihren freien Rändern gegeneinander zusammengedrückt werden, wodurch eine Vorspannung der Halterung erzeugt und die Wirkung des Einschnappmechanismus verstärkt wird. Andererseits kann die bevorzugte Ausführungsform der Halterung aus einem Werkstück hergestellt werden, wenn Metall - beispielsweise Blech - als Ausgangsmaterial verwendet wird. Weiter sind beispielsweise für die Verbindung von Metall am Zahn verschiedene Klebetechniken bekannt und erprobt, welche eine sichere und für die Behandlungsdauer genügend starke Verbindung zwischen der Halterung und dem Zahn gewährleisten. Die Halterung kann auch aus nichtmetallischen Materialien hergestellt werden, wie beispielsweise Kunststoff oder Keramik.

Das Anschlusselement kann wie die Halterung aus Metall hergestellt werden. Dies ist vorteilhaft, wenn die Vorsprünge am Anschlusselement angeordnet sind. Aus ästhetischen Gründen kann beispielsweise Keramik als Ausgangsmaterial verwendet werden, da Keramik farblich leicht an die natürliche Zahnfarbe, insbesondere der benachbarten Zähne angepasst werden kann. Weiter ist die Verwendung von Kunststoff auch für das Anschlusselement möglich. Die Materialwahl ist durch das Zusammenwirken zwischen der Halterung und dem Anschlusselement bedingt. Einerseits soll die Verbindung formschlüssig und andererseits muss eine Montage des Anschlusselements in der Halterung noch möglich sein.

Die bezüglich des Anschlusselements gemachten Aussagen zur Materialwahl gelten sinngemäss auch für das Abdeckelement. Hat das Abdeckelement zusätzlich zur Verbesserung der Fixierung des Anschlusselements in der Halterung eine ästhetische Funktion oder dient es rein einer optischen Kaschierung, sind zumindest die beim Öffnen des Mundes des Patienten visuell von aussen durch Dritte erkennbaren Flächen mit einer Beschichtung versehen, welche vorzugsweise auf die Zahnfarbe des Patienten abgestimmt ist. Ist das Abdeckelement nur aus ästhetischen Gründen vorgesehen, kann es beispielsweise aus einem zahnfarbenen Kunststoff oder aus Keramik hergestellt sein. Soll es dagegen eine Verbesserung der Fixierung des Anschlusselements in der Halterung bewirken, sollte das zur Herstellung verwendete Material eine gewisse Federwirkung haben, so dass eine zusätzliche Klemmwirkung des Abdeckelements auf das Anschlusselement neben der Klemmwirkung durch die Halterung erzeugt wird.

Die Materialwahl des Mittels zur Korrektur ist von der Funktion dieses Mittels abhängig. Je nach Anwendung können verschiedene Materialien verwendet werden. Korrekturbögen, beispielsweise ein Labialbogen, werden vorzugsweise aus einem Draht gebogen, welcher beispielsweise ein korrosionsbeständiger, bioverträglicher Stahl oder Thermodraht ist.

Vorzugsweise ist das Anschlusselement mit Öffnungen versehen, in welchen die Mittel zur Korrektur, beispielsweise ein Draht, befestigt werden. Bevorzugt werden die Öffnungen in den Anschlusselementen mit Bohrungen erstellt. Deren Durchmesser entsprechen bevorzugt dem Aussendurchmesser des zu befestigenden Mittels: Werden mehr als zwei Mittel zur Korrektur an einem Anschlusselement befestigt, werden entsprechend der Anzahl der zu befestigenden Mittel die Anzahl von Bohrungen erstellt. Die Bohrungen können auch unterschiedliche Durchmesser aufweisen, wobei der Durchmesser in Abhängigkeit des Aussendurchmessers des zu befestigenden Mittels bestimmt wird, beispielsweise eines Drahtes. Die Öffnungen im Anschlusselement können auch ausgestanzt werden. Neben einem kreisförmigen Querschnitt können die Öffnungen auch quadratisch, rechteckig oder mehreckig ausgestaltet werden. Im Wesentlichen werden die Querschnitte der Öffnungen im Anschlusselement auf den Querschnitt des Anschlussstücks des verwendeten Mittels zur Korrektur abgestimmt.

Werden zwischen einzelnen Anschlusselementen unterschiedliche Mittel zur Korrektur vorgesehen (z. B. Drahtschlaufen mit unterschiedlichen Durchmessern und/oder unterschiedlichen Querschnitten), können einerseits die Anschlusselemente auf die unterschiedlichen Mittel zur Korrektur abgestimmte Öffnungen aufweisen, oder andererseits eine einheitliche Ausgestaltung der Öffnung haben, in welcher zumindest die Anschlussabschnitte der Mittel zur Korrektur entsprechend der zur Verfügung stehenden Möglichkeiten befestigt werden.

Soll beispielsweise ein gebogener Draht am Anschlusselement gehalten werden, wird das Anschlusselement mit einem Schlitz versehen. Der Schlitz ist vorzugsweise an seinen freien Enden im Querschnitt des Schlitzes verjüngt ausgebildet. Dadurch kann der zu befestigende Draht im Anschlusselement eingeschnappt werden.

An der erfindungsgemässen Vorrichtung lassen sich weitgehend alle in der Orthodontie angewendeten Mittel zur Korrektur von Gebissanomalien befestigen. Die Mittel zur Korrektur sind beispielsweise Labialbögen, okklusale, lingual/palatinal, buccale angeordnete Aufbisse, Lingual-/Sublingual- oder Transversalbügel, Konstruktionen im Zusammenhang mit einem Headgear (Kopf-Kinn-Kappe), Platz-/Lückenhalter (bspw. bei Zahnlücken nach einem frühzeitigen Milchzahnverlust), Verschnürungen (bspw. die Multibandtechnik). Weiter können an der erfindungsgemässen Vorrichtung auch so genannte Teilprothesen (bspw. abgestützte Prothesen, Schaltprothesen, Freiendprothesen) und Brücken befestigt werden.

In einer bevorzugten Ausführung weist das Mittel zur Korrektur, insbesondere in der Verwendung für die erfindungsgemässe Vorrichtung, einen Korrekturkörper und zwei Drahtanschlüsse zur Befestigung des Mittels zur Korrektur an Anschlusselementen auf. Die Drahtanschlüsse sind beispielsweise an ihren in dem Korrekturkörper angeordneten Enden mit Verankerungen versehen, welche die Haftung der Drahtanschlüsse im Korrekturkörper verbessert. Eine verbesserte Verankerung des Drahtanschlusses im Korrekturkörper kann beispielsweise mit einem Aufsplitten des Drahtendes erreicht werden. Eine weitere Möglichkeit ist eine zumindest im Verbindungsbereich mit dem Korrekturkörper perforierte Oberfläche des Drahtes, welche sich auf die Auszugseigenschaften des Drahtes unter Belastung positiv auswirkt.

In Abhängigkeit von der Position des Korrekturkörpers und den auftretenden Belastungen auf diesen können auch mehr als zwei Drahtanschlüsse am Korrekturkörper vorgesehen werden, welche ihrerseits an den Anschlusselementen befestigt sind. Dabei ist es denkbar, dass mehrere Drahtanschlüsse an einem Anschlusselement befestigt werden.

Der Korrekturkörper kann beispielsweise als okklusaler, lingualer bzw. palatinaler, buccaler Aufbiss dienen. Weiter kann der Korrekturkörper in Form einer "Nance"-Platte ausgebildet sein. Die freien Drahtenden sind jeweils an einem Anschlusselement befestigt, welches seinerseits in einer vorzugsweise an einem der Molaren angeordneten Halterung eingesteckt wird.

In einer weiteren vorteilhaften Ausführung ist der Korrekturkörper aus einem verformbaren, vorzugsweise lichthärtenden Kunststoff hergestellt und im Mund des Patienten oder im Labor im Modell anpassbar. Ein vorfabriziertes Stück von geeignetem Material für den Korrekturkörper wird im Mund des Patienten durch Druck an die gegebene Situation angepasst und mit den zwei Drahtanschlüssen versehen. Anschliessend wird der vor Ort ausgeformte Korrekturkörper ausgehärtet und an den entsprechenden Anschlusselementen befestigt, so dass das Mittel zur Korrektur an den Halterungen eingesetzt werden kann. Der anpassbare Korrekturkörper kann mit den Drähten unter kontrollierten Bedingungen beispielsweise in einem Labor als Halbfabrikat vorfabriziert werden, welches von Zahnärzten, Kieferorthopäden sowie Zahntechnikern weiter verwendet wird.

Wird aus dem verformbaren Material ein Korrekturkörper beispielsweise in der Art einer "Nance"-Platte gefertigt, wird in einem ersten Schritt eine erste Schicht dieses Materials an den Kiefer angepasst. Anschliessend werden die Drahtanschlüsse in die erste Schicht eingedrückt. Wenn die erste Schicht nur eine geringe Dicke aufweist, wäre auch nach einer Aushärtung dieser Schicht die Verankerung der Drahtanschlüsse nicht gewährleistet. Man trägt zur Verbesserung der Verankerung der Drahtanschlüsse und/oder zur Gewährleistung der Gebrauchstauglichkeit des Korrekturkörpers eine zweite verformbare Schicht auf, welche einerseits die im Korrekturkörper angeordneten Enden der Drahtanschlüsse überdeckt und andererseits die nötige Steifigkeit des Korrekturkörpers schafft. Nachdem der Korrekturkörper mit den Drahtanschlüssen ausgeformt ist, wird er ausgehärtet und die freien Drahtenden werden an den Anschlusselementen befestigt.

Anstelle zweier oder mehrerer Drahtanschlüsse kann ein durchgehender Drahtabschnitt verwendet werden, welcher von einem Anschlusselement bzw. einer Halterung zum anderen Anschlusselement bzw. zur anderen Halterung verläuft. In seiner Form ist dieser Draht an die örtlichen Gegebenheiten angepasst bzw. anpassbar. Vorzugsweise weist ein solcher Draht zumindest im Bereich, in welchem der Korrekturkörper ausgeformt wird, eine perforierte oder anderweitig bearbeitete Oberfläche auf, so dass zwischen dem Draht und dem Korrekturkörper ein guter Verbund geschaffen wird.

Bei einem durchgehenden Draht können unerwünschte Spannungen in diesem auftreten, welche die Gebrauchstauglichkeit des Mittels zur Korrektur wesentlich einschränken. Ein durchgehender Draht weist deshalb vorzugsweise drei Abschnitte auf: Einerseits zwei Abschnitte, die als Anschluss des Mittels zur Korrektur an den Anschlusselementen dienen und im Wesentlichen starr (formstabil) ausgebildet sein können, und andererseits einen zwischen den im Wesentlichen starren Abschnitten angeordneten flexiblen Abschnitt. Der flexible Abschnitt kann beispielsweise aus einem anderen Material hergestellt sein, als die Abschnitte des Drahtes für die Befestigung an den Anschlusselementen. Vorzugsweise ist der flexible Abschnitt eine aus mehreren Kettengliedern gebildete Kette. Damit kann auf einfache Weise der Draht an die örtlichen Gegebenheiten angepasst werden, z. B. durch Zusammenschieben, Auseinanderziehen oder Biegen. Vorzugsweise wird ein Teil der im Wesentlichen starren Abschnitte des Drahtes vom Korrekturkörper umfasst, damit die Stabilität des Mittels zur Korrektur gegeben ist.

Anstelle eines Drahtes mit einem kettenartigen Zwischenabschnitt kann dieser federartig ausgebildet sein. Grundsätzlich sind die verschiedensten Ausgestaltungen des flexiblen Abschnitts anwendbar, sofern der Draht sich einfach anpassen lässt. Der flexible Abschnitt ist weiter für den Verbund des Drahtes mit dem Korrekturkörper vorteilhaft, da eine grosse Kontaktfläche zwischen dem Draht und dem Korrekturkörper gegeben ist.

Eine weiteres vorteilhaftes und zur Verwendung mit der erfindungsgemässen Vorrichtung geeignetes Mittel zur Korrektur ist ein Aufbiss, welcher zumindest zwei Schichten umfasst, beispielsweise eine Tragschicht und eine verformbare Schicht. Die erste Schicht - die so genannte Tragschicht - ist beispielsweise mit einer Öffnung versehen, vorzugsweise einer Bohrung. In der Öffnung wird beispielsweise ein Draht hindurchgeführt, welcher den Aufbiss am gewünschten Ort im Mund des Patienten fixiert. Zumindest eine zweite Schicht ist auf dieser Tragschicht angeordnet. Diese Schicht ist leicht verformbar. Der Aufbiss wird im Mund des Patienten eingesetzt und am Einsatzort angepasst. Anschliessend wird der angepasste Aufbiss aus dem Mund des Patienten entfernt und endgültig gehärtet. Vorstehendes, ausgequelltes Material und allfällig nicht benötigte Abschnitte der Tragschicht werden entfernt, beispielsweise abgeschnitten, und der Aufbiss wird im Mund des Patienten definitiv mit der erfindungsgemässen Vorrichtung am richtigen Ort fixiert. Ein Aufbiss muss genau auf den Ort angepasst werden, an welchem der Aufbiss angeordnet wird, da sonst Druckstellen oder Verletzungen auftreten, insbesondere bei einer buccalen Anordnung des Aufbisses. Durch den erfindungsgemässen Aufbiss kann auf eine Herstellung eines Modells zur Herstellung des Aufbisses verzichtet werden.

Geeignete Materialien für die Herstellung eines erfindungsgemässen Aufbisses sind Kunststoffe, welche die gewünschten Anforderungen erfüllen. Das Material für die Tragschicht muss vor dem Anpassen des Aufbisses komplett ausgehärtet sein. Neben harten Kunststoffen kommt für die Tragschicht auch ein weicher Kunststoff in Frage, wobei die damit verbundene Verformbarkeit sich nicht nachteilig auf die Positionierung des Aufbisses im Mund des Patienten auswirken darf. Die verformbare Schicht wird beispielsweise aus einem zur Aushärtung durch Lichtpolymerisation geeigneten Kunststoff hergestellt. Die zweite Schicht des im Mund des Patienten geformten Aufbisses wird durch eine spezielle Lichtquelle (bspw. einer Halogenglühlampe) in kurzer Zeit gehärtet. Die Schichtdicke der verformbaren Schicht beträgt je nach Anwendung nur wenige Millimeter. Bei einer Härtung des geformten Aufbisses mittels Lichtpolymerisation kann nur eine begrenzte Schichtdicke ausgehärtet werden. Je nach Anwendung können deshalb auch mehrere verformbare Schichten auf der Tragschicht angeordnet werden, wobei die Schicht zwischen der verformbaren Schicht und der Tragschicht beispielsweise als Unterfütterung dienen kann.

Bei dem Aufbiss handelt es sich vorzugsweise um ein so genanntes Halbfabrikat, bevorzugt aus Kunststoff hergestellt. Der Aufbiss muss mit einfachen Mitteln, beispielsweise einem Messer, angepasst werden können. Entsprechend dem vorgesehenen Einsatzort werden die Aufbisse als so genannte Standardprodukte vorfabriziert. Beispielsweise reicht ein vorfabrizierter Typ eines Aufbisse lingual beziehungsweise palatinal vom rechten bis zum linken Caninus. Soll dieser Aufbiss nur die Incisivi abdecken, kann der Aufbiss beispielsweise auf diese Grösse zurecht geschnitten werden. Aufbisse können auch okklusal angeordnet sein. Beispielsweise wird ein Typ eines Aufbisses vorfabriziert, welcher die Molaren und den ersten, an die Molaren benachbarten Prämolar bedeckt. Soll der Aufbiss nur die Molaren abdecken, wird der nicht benötigte Teil des Aufbisses abgeschnitten, welcher den Prämolar bedecken würde. Der Typ des okklusal angeordneten Aufbisses wird vorzugsweise in wenigen Standardbreiten, beispielsweise in einer Breite für Zähne von Kindern, Jugendlichen und Erwachsenen hergestellt. Ein allfälliger seitlicher Überstand kann problemlos entfernt werden. So können für die häufigsten Anwendungen der Aufbisse entsprechende Halbfabrikate hergestellt werden. Dies führt einerseits durch die hohen Stückzahlen und andererseits durch die Reduktion des Arbeitsaufwandes zu massgeblich tieferen Kosten.

Eine vorteilhafte Ausführung einer Halterung, insbesondere zur Anwendung mit der erfindungsgemässen Vorrichtung, weist einen Befestigungsbereich mit einer anpassbaren Schicht auf. Jeder Zahn hat mehrere individuell ausgeformte Oberflächen. Beispielsweise weist die vestibuläre Seite eines Zahns meistens eine andere Ausgestaltung auf als die entsprechende linguale bzw. palatinale Seite desselben Zahns. Die Basis einer Halterung ist dagegen normalerweise starr und somit nicht ohne weiteres an die entsprechende Oberfläche des Zahns anpassbar. Mit einer Kleberschicht kann die Basis unterfüttert werden, so dass die Halterung ausgerichtet am Zahn befestigt ist und Unebenheiten der entsprechenden Zahnoberfläche ausgeglichen werden. Um die Halterung unterfüttern zu können, muss das Klebematerial eine gewisse Materialstärke aufweisen. Dies kann jedoch dazu führen, dass beim Andrücken der Halterung verdrängtes Klebermaterial in die Aufnahme der Halterung eindringt, aushärtet und das Anschlusselement anschliessend nicht mehr oder nur erschwert in die Halterung eingesetzt werden kann. Andererseits besteht die Gefahr, dass das Anschlusselement in der Halterung durch noch nicht ausgehärteten, in die Aufnahme der Halterung eingedrungenen Kleber an der Halterung unlösbar fixiert wird. Soll die Vorrichtung zu einem späteren Zeitpunkt aus dem Mund des Patienten - beispielsweise zur Reinigung oder für eine Anpassung der Vorrichtung - entnommen werden, ist dies nur zum Teil möglich, da das Anschlusselement an der Halterung festklebt.

Mit der anpassbaren Schicht werden somit die angeführten Probleme bei einer geklebten Befestigung der Halterung an einem Zahn gelöst. Der Kleber zur Befestigung der Halterung am Zahn wird auf die entsprechende Zahnoberfläche und gegebenenfalls auf die freie Fläche der anpassbaren Schicht aufgetragen. Danach wird die Halterung ausgerichtet und anschliessend wird die Halterung an den Zahn solange angedrückt, bis die Befestigung genügend stark bzw. ausgehärtet ist. Allfällig unter der anpassbaren Schicht hervortretender Kleberüberschuss kann infolge der geringen Materialmenge kaum in die Aufnahme der Halterung eindringen. Weiter gleicht die anpassbare Schicht die Unebenheiten der Zahnoberfläche aus und die Halterung kann entsprechend ausgerichtet werden.

Vorzugsweise ist die anpassbare Schicht ein verformbarer, lichthärtender Kunststoff. Sobald die Halterung ausgerichtet ist, wird mit einer geeigneten Lichtquelle die anpassbare Schicht ausgehärtet. Eine weiteres Material wäre beispielsweise ein Kunststoff, welcher unter Druck seine molekulare Struktur ändert und aushärtet. Eine anderes Material könnte zementartige Einschlüsse beinhalten, welche unter Druck aufplatzen und das umliegende Material durch eine Klebewirkung verhärten. Solche Materialien könnten auch für die anderen anpassbaren Vorrichtungen verwendet werden, wie beispielsweise für den verformbaren Korrekturkörper.

Vorzugsweise ist zwischen der Basis der Halterung und der anpassbaren Schicht ein Übergangsstück angeordnet. Die Verbindung zwischen der Basis der Halterung und dem Übergangsstück beziehungsweise die Verbindung zwischen dem Übergangsstück und der anpassbaren Schicht wird bevorzugt vorfabriziert, so dass diese Verbindungen unter kontrollierten Laborbedingungen mit einer hohen Qualität hergestellt werden können. Weiter ist es auch denkbar, dass die genannten Einzelteile vom Zahnarzt beziehungsweise vom Kieferorthopäden beim Befestigen der Halterungen an den Zähnen in Abhängigkeit der vorhandenen örtlichen Bedingungen im Mund des Patienten in der beschriebenen Kombination oder einer anderen Zusammenstellung angeordnet werden.

Die Basis der Halterung ist in den meisten Ausführungsformen starr und flach ausgebildet. Zur Berücksichtigung der im Wesentlichen konvexen Oberfläche eines Zahns weist ein bevorzugt ausgebildetes Übergangsstück zumindest im Bereich der Kontaktfläche mit der Basis der Halterung eine flache Kontaktfläche und auf der dem Zahn zugewandten Fläche eine leicht konkave Ausgestaltung auf. Die anpassbare Schicht ist an der dem Zahn zugewandten Fläche angeordnet und übernimmt im Wesentlichen die Ausgestaltung, welche diese Fläche aufweist.

Die Halterung und das Übergangsstück sind vorzugsweise aus Metall hergestellt und weisen zumeist andere Material- und somit auch Haftungseigenschaften auf als die anpassbare Schicht. Zur Erhöhung der Kontaktfläche zwischen dem Übergangsstück und der anpassbaren Schicht ist die entsprechende Fläche des Übergangsstücks mit Längs- und/oder Querrillen versehen. Weiter können die Kontaktflächen mit einer Schicht (z. B. einem Metall-Kunststoff Preimerfilm) versehen werden, welche die Haftungseigenschaften der mit dieser Schicht versehenen Fläche und dem Klebematerial verbessert.

Eine bevorzugte Ausführung der Halterung hat an der Basis der Halterung zumindest eine Vertiefung ausgebildet, welche mit dem benachbarten Element einen Kopplungsbereich gemäss einer Matrize/Patrize schafft. Die zumindest eine Vertiefung ist beispielsweise aus der Basis der Halterung in einem Pressverfahren ausgeformt oder wird als einzelnes, eigenständiges Element an der Unterseite der Basis befestigt. Das benachbarte Element, vorzugsweise das Übergangsstück, weist eine entsprechend der Vertiefung der Basis ausgebildete Ausnehmung auf. Bevorzugt ist die Ausnehmung in der Tiefe kleiner ausgebildet als die Vertiefung, welche an der Basis der Halterung vorsteht. Vorzugsweise ist diese Ausnehmung etwa halb so tief wie der Vorsprung der Vertiefung in der Basis der Halterung. Handelt es sich bei dem zur Basis der Halterung benachbarten Element um die anpassbare Schicht, kann in Abhängigkeit der Materialeigenschaften der anpassbaren Schicht auf eine Ausnehmung in der anpassbaren Schicht zur Aufnahme der Vertiefung in der Basis der Halterung verzichtet werden. Die benötigte Ausnehmung in der anpassbaren Schicht wird dann beim Andrücken der Halterung ausgebildet.

Der Kopplungsbereich dient beispielsweise als Positionierungshilfe für die Halterung. Damit kann eine hohe Genauigkeit der gesamten erfindungsgemässen Vorrichtung gewährleistet werden, da allfällige Übertragungstoleranzen sehr klein sind. Weiter ermöglicht der Kopplungsbereich eine beschränkt flexible Ausrichtung der Halterung. Dies ist besonders bei starken Anomalien vorteilhaft. Zu Beginn der Behandlung können bei einer starken anomalen Zahnstellung die Verbindungen zwischen den Anschlusselementen und den Halterungen unter grossen Belastungen stehen, insbesondere wenn die Halterungen fest an den Zähnen befestigt sind und nicht in einem beschränkten Mass ausgleichende Bewegungen ausführen können.

An Zähnen (z. B. den Molaren) mit einer grossen zur Befestigung der Halterung zur Verfügung stehenden Oberfläche können an der Basis der Halterung mehrere, beispielsweise zwei, Vertiefungen vorgesehen werden. Das benachbarte Element - zumeist das Übergangsstück - hat in einer solchen Ausführungsform entsprechend der Anzahl der Vertiefungen ausgebildete Ausnehmungen.

Vorzugsweise wird für die Palatinal- und Lingualbögen ein so genannter Thermodraht verwendet. Der Thermodraht wird durch den Zahntechniker, gegebenenfalls auch durch den Zahnarzt, gemäss der Art des Einsatzes geformt und beispielsweise elektrothermisch aufgeheizt. Nach der Abkühlung kehrt der Thermodraht immer in die Form zurück, welche vor dem Aufheizen ausgebildet wurde. Der Draht kann beispielsweise gebogen oder gefaltet werden, ohne das die ursprünglich geformte Ausgestaltung ändert.

Insbesondere wenn der Patient instruiert wurde, die Vorrichtung selbst zu entfernen, zu reinigen und wieder einzusetzen, ist die Verwendung eines Thermodrahtes zumindest für die Palatinal- und Lingualbögen vorteilhaft. Selbst bei einem unsachgemässen Umgang mit der Vorrichtung bleibt die Form weitgehend erhalten. Der Thermodraht hält auch über längere Zeit die durch die Ausformung des Thermodrahts erzeugte Spannung bei.

Werden anstelle eines über mehrere Anschlusselemente verlaufenden Drahts einzelne, jedes benachbarte Anschlusselement verbindende Drahtschlaufen beziehungsweise "Loops" angeordnet, wird vorzugsweise ein Thermodraht verwendet.

In einer besonderen Ausführung bei der Verwendung des Thermodrahts wird ein Setup erstellt und der Thermodraht in diesem angepasst. Ein Setup ist ein Modell eines Unter- oder eines Oberkiefers eines Patienten, bei welchem die Zahnstellung bereits korrigiert wurde. Anhand dieses Models werden die Mittel zur Korrektur ausgeformt, beispielsweise der Palatinal- und Lingualbögen. Anschliessend werden die Mittel zur Korrektur im Anschlusselement eingesetzt und am unkorrigierten Gebiss des Patienten durch den Zahnarzt vorzugsweise mit der erfindungsgemässen Vorrichtung befestigt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Einen Querschnitt durch eine Halterung der erfindungsgemässen Vorrichtung;
- Fig. 2: eine Seitenansicht einer Halterung der erfindungsgemässen Vorrichtung;
- Fig. 3a-c: jeweils eine Draufsicht auf beispielhafte Anschlusselemente der erfindungsgemässen Vorrichtung;
- Fig. 4: einen Querschnitt durch eine Halterung der erfindungsgemässen Vorrichtung mit einer okklusalen Aufnahme;
- Fig. 5: eine Seitenansicht einer Halterung der erfindungsgemässen Vorrichtung;
- Fig. 6: einen Querschnitt durch eine Variante der Halterung der erfindungsgemässen Vorrichtung;
- Fig. 7: eine Ansicht eines Zahns mit einer aufgeklebten Halterung der erfindungsgemässen Vorrichtung;
- Fig. 8: eine Draufsicht auf einen Unterkiefer mit einem seitlichen Aufbiss an den Incisivi;
- Fig. 9: einen Querschnitt durch einen Incisivus entlang der Schnittlinie A-A;
- Fig. 10: eine perspektivische Draufsicht auf einen Oberkiefer mit zwei okklusal angeordneten Aufbissen auf den Molaren und den hintersten Prämolaren;
- Fig. 11: eine Ansicht eines Zahns mit der erfindungsgemässen Vorrichtung in Funktion eines Aufbisses;
- Fig. 12: eine Ansicht eines Zahns mit der erfindungsgemässen Vorrichtung in Funktion eines Brackets;
- Fig. 13a-e: eine Draufsicht auf einen Kiefer mit verschiedenen Anwendungsbeispielen der erfindungsgemässen Vorrichtung;
- Fig. 14: eine perspektivische Draufsicht auf einen Oberkiefer mit einem palatinal angeordneten, aus einzelnen Schlaufen zusammengesetzten Korrekturbügel;
- Fig. 15a-c: jeweils ein Detail von beispielhaften Schlaufen;
- Fig. 16: ein Detail eines Korrekturdrahtes mit einem flexiblen Abschnitt;
- Fig. 17: eine Detailansicht auf zwei erfindungsgemässe Anschlusselemente mit zwei beispielhaften, an den Anschlusselementen befestigten Korrekturdrahtabschnitten;
- Fig. 18: eine Ansicht eines Zahns mit einem erfindungsgemässen Übertragungselement und einer Halterung;
- Fig. 19: eine Ansicht eines Zahns mit einem eingesetzten Übertragungselement;
- Fig. 20: eine perspektivische Draufsicht auf einen Unterkiefer mit lingual angeordneten Halterungen und eingesetzten Übertragungselementen;
- Fig. 21: eine Ansicht eines Zahns mit einer Halterungsabdeckung;
- Fig. 22: einen schematischen Schnitt durch erfindungsgemässe flexible Kunststoffelemente mit einem Trägerdraht;
- Fig. 23: eine Draufsicht auf einen Unterkiefer mit einem seitlichen Aufbiss an den Incisivi aus flexiblen Kunststoffelementen;
- Fig. 24: eine Draufsicht auf einen Oberkiefer mit einem "Nance"-Platten-ähnlichen Korrekturmittel aus flexiblen Kunststoffelementen;
- Fig. 25: eine Draufsicht auf einen Oberkiefer mit vestibulär angeordneten erfindungsgemässen flexiblen Kunststoffelementen;
- Fig. 26: einen Aufbau einer Klebeverbindung zwischen einer direkt am Zahn befestigten Halterung und einem Zahn;
- Fig. 27: eine Draufsicht auf eine Halterung;
- Fig. 28: eine Seitenansicht der Halterung gemäss Figur 27; und
- Fig. 29: eine Draufsicht einer Halterung zur Anwendung an einem Molar.

Grundsätzlich sind in den Figuren gleiche Teile mit gleichen Bezugszeichen versehen.

### Wege zur Ausführung der Erfindung

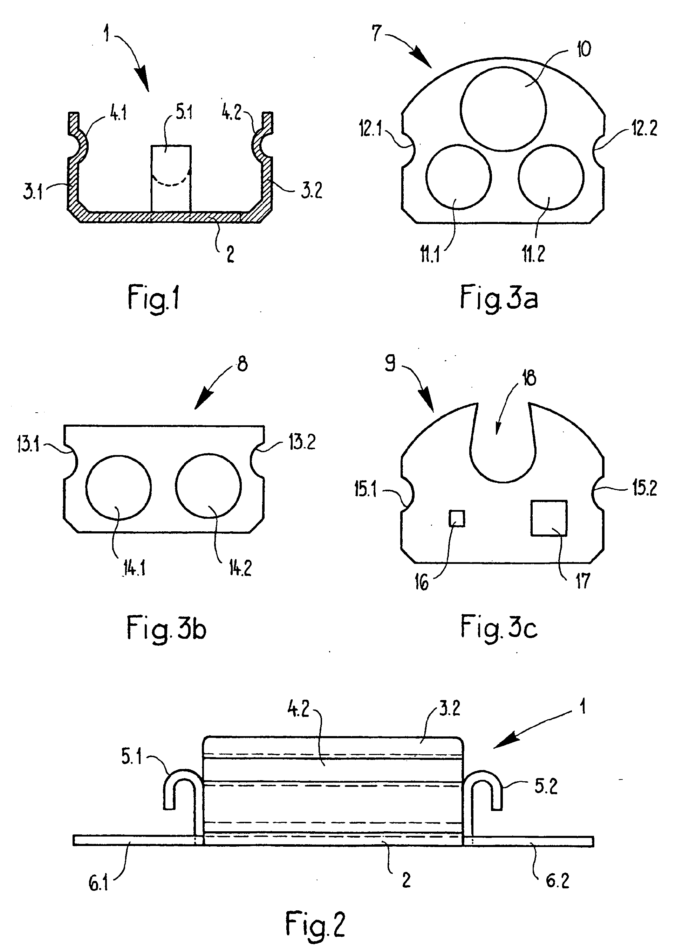

Figur 1 zeigt einen Querschnitt durch eine Halterung der erfindungsgemässen Vorrichtung. Die Halterung, nachfolgend Clip 1 genannt, wird vorzugsweise aus korrosionsbeständigem Metall hergestellt. Als Variante dazu kann der Clip 1 auch aus Keramik, Kunststoff oder einem anderen korrosionsstabilen und bioverträglichen Material hergestellt werden. Der Clip 1 hat vorzugsweise einen rechteckigen Querschnitt und ist kanalförmig ausgebildet. Er umfasst eine Basis 2 und zwei Seitenwände 3.1 und 3.2. Die Seitenwände 3.1 und 3.2 haben nach innen, d. h. zum Querschnitt ausgerichtete, und bevorzugt über die ganze Länge der Seitenwände 3.1 und 3.2 verlaufende Vorsprünge 4.1 bzw. 4.2. Vorzugsweise sind die Vorsprünge 4.1 und 4.2 aus dem Grundmaterial des Clips 1 geformt und weisen bevorzugt eine kreisbogenförmige Ausgestaltung auf. Die Vorsprünge 4.1 und 4.2 können auch auf die Seitenwände 3.1 und 3.2 aufgebracht werden, beispielsweise aufgeschweisst oder aufgelötet. Weiter können die Vorsprünge 4.1 und 4.2 auch eine andere, beispielsweise eine dreieckige Ausgestaltung aufweisen. Durch die Vorsprünge 4.1 und 4.2 wird das eingesetzte Anschlusselement, wie nachfolgend noch im Detail beschrieben wird, im eingeschnappten Zustand gehalten. Am Clip 1 sind zusätzlich noch zwei Halteteile angeordnet. In der Figur 1 ist nur das Halteteil 5.1 dargestellt. An den Halteteilen kann beispielsweise eine Ligatur oder ein Multiband befestigt werden.

Eine Seitenansicht einer Halterung der erfindungsgemässen Vorrichtung ist in Figur 2 dargestellt. In dieser Ansicht ist der Vorsprung 4.2 von der Seitenwand 3.2 her gesehen konvex ausgebildet. Die Halteteile 5.1 und 5.2 sind an ihren freien Enden hakenförmig bevorzugt in Richtung der Basis 2 abgebogen. Der hier gezeigte Clip 1 ist derart ausgebildet, dass die Basis 2 lateral (beispielsweise lingual bzw. palatinal oder buccal am Zahn befestigt wird. Die Basis 2 weist Laschen 6.1 und 6.2 auf, welche die Kontaktfläche zwischen dem Zahn und der Halterung vergrössern und somit eine verbesserte und damit eine längere Haftung des Clips 1 am Zahn gewährleisten. Die Befestigung des Clips 1 am Zahn erfolgt vorzugsweise mit einer geeigneten Klebetechnik. Neben dieser bevorzugten Variante der Befestigung kann der Clip 1 auch an einem Zahnband aufgelötet oder aufgeschweisst sein. Bevorzugt wird der Clip 1 aus einem Werkstück hergestellt. Es kann jedoch auch aus mehreren Einzelteilen, gegebenenfalls mit Einzelteilen aus unterschiedlichen Materialien, beispielsweise durch Löten oder Schweissen zusammengesetzt sein.

Die Figuren 3a, 3b und 3c zeigen jeweils eine Draufsicht auf beispielhafte Anschlusselemente der erfindungsgemässen Vorrichtung. Die Anschlusselemente 7, 8 und 9 sind bevorzugt aus einem Block hergestellt und weisen vorzugsweise eine quaderförmige Ausgestaltung auf. Die Anschlusselemente 7, 8 und 9 haben in Längsrichtung an zwei Seiten eine Nut ausgebildet, welche komplementär mit den Vorsprüngen 4.1 und 4.2 ausgebildet ist. Die Vorsprünge 4.1 und 4.2 sowie die Nuten bilden zusammen den Einschnappmechanismus. Das Anschlusselement, beispielsweise das Anschlusselement 7, wird in den Clip 1 hineingedrückt, bis der Vorsprung 4.1 bzw. 4.2 in der entsprechenden Nut einschnappt. Durch den Einschnappmechanismus und der Klemmwirkung der Seitenwände 3.1 und 3.2 wird das Anschlusselement an der Halterung sicher gehalten. Das Anschlusselement kann vor dem Montieren bereits mit dem zu haltenden Mittel zur Korrektur versehen sein. Die Mittel zur Korrektur weisen zumeist Drahtanschlüsse auf, welche an den Anschlusselementen durch Lasern, Kleben, usw. befestigt sind. Weiter kann das eigentliche Korrekturmittel auch nach dem Montieren des Anschlusselements in diesem befestigt werden.

Die nachfolgenden Massangaben beziehen sich auf beispielhafte Ausführungen der erfindungsgemässen Vorrichtung. Je nach Art des Zahns, beispielsweise bei einer Befestigung auf einem Molar, Prämolar, Caninus oder Incisivus, variieren die Abmessungen, insbesondere die Länge, des Befestigungs- und des Anschlusselements.

In Figur 3a ist ein Anschlusselement 7 mit drei Bohrungen 10, 11.1 und 11.2 dargestellt. An zwei Seiten sind die vorzugsweise über die ganze Länge des Anschlusselements 7 verlaufenden Nuten 12.1 und 12.2 angeordnet, welche in den Dimensionen komplementär zu den Vorsprüngen 4.1 bzw. 4.2 des entsprechenden Clips 1 ausgebildet sind. Die Bohrung 10 ist in ihrem Durchmesser grösser als die Bohrungen 11.1 und 11.2 ausgebildet. Im vorliegenden Beispiel sind die Bohrungen 11.1 und 11.2 gleich gross ausgebildet. Durch die Anordnung mehrerer Bohrungen 10, 11.1 und 11.2 können an diesem Anschlusselement 7 beispielsweise drei Drähte befestigt werden. Die Grösse des Durchmessers der jeweiligen Bohrung 10, 11.1 und 11.2 wird entsprechend dem verwendeten Aussendurchmesser und der Form des zu befestigten Drahtes, beispielsweise eines Korrekturbogens, ausgebildet.

Die Hauptabmessungen des Anschlusselements 7 betragen in diesem Beispiel etwa 3 mm für die Breite, etwa 2.5 mm für die Höhe und etwa 4 mm für die Länge. Der kanalförmige Querschnitt des zugehörigen Clips 1 weist im Wesentlichen die gleichen Innenabmessungen wie die Aussenabmessungen des Anschlusselements 7 auf. Die Innenabmessung des Clips 1 beträgt in der Höhe etwa 1.5 mm, weshalb beim vorliegenden Anschlusselement 7 ein Teil des Anschlusselements 7 über den Clip 1 vorsteht. Damit keine Verletzungen des benachbarten Gewebes, insbesondere bei einer lateralen Befestigung der Vorrichtung am Zahn, entstehen, wird der vorstehende Teil des Anschlusselements 7 vorzugsweise abgerundet.

Figur 3b zeigt im Gegensatz zu Figur 3a ein Anschlusselement 8, welches wie das Anschlusselement 7 Nuten 13.1 und 13.2 aufweist, aber in den Aussenabmessungen den Innenabmessungen des Clips 1 entspricht. Die Höhe des Anschlusselements 8 beträgt etwa 1.5 mm. Damit schliesst das Anschlusselement 8 bündig mit der freien Kante der Seitenwände 3.1 bzw. 3.2 des Clips 1 ab. Das Anschlusselement 8 ist mit zwei Bohrungen 14.1 und 14.2 - hier mit gleichem Durchmesser - versehen, welche den zu befestigenden Korrekturbogen aufnehmen. Die Befestigung des Anschlusselements 8 erfolgt in der gleichen Weise, wie es beim Anschlusselement 7 beschrieben wurde.

Eine weitere Variante eines Anschlusselements ist in Figur 3c dargestellt. Die Hauptabmessungen des Anschlusselements 9 entsprechen weitgehend den Hauptabmessungen des Anschlusselements 7. Damit das Anschlusselement 9 im Clip 1 einschnappen kann, sind auch hier komplementär zu den Vorsprüngen 4.1 und 4.2 des Clips 1 ausgebildete, vorzugsweise über die ganze Länge verlaufende Nuten 15.1 und 15.2 angeordnet. Zum Schutz vor Verletzungen des zu der Vorrichtung benachbarten Bereichs, beispielsweise bei einer lateralen Befestigung der Halterung, ist der über den Clip 1 vorstehende Teil des Anschlusselements 8 abgerundet. Die Bohrungen 16 und 17 haben einen rechteckigen, in diesem Beispiel einen unterschiedlich grossen, quadratischen Querschnitt. Weiter ist ein über die ganze Länge verlaufender Schlitz 18 angeordnet, welcher beispielsweise einen Draht eines Korrekturbogens oder einzelne Drahtschlaufen aufnehmen kann. Der Querschnitt des Schlitzes 18 ist vorzugsweise gegen die offene Seite des Schlitzes leicht verjüngt, wodurch der zu befestigende Korrekturbogen beziehungsweise die Drahtschlaufen in einer bevorzugten Weise gehalten beziehungsweise eingeklemmt werden. Der Korrekturbogen kann auch beispielsweise mit einer Ligatur oder einem Keil am Anschlusselement 9 fixiert werden.

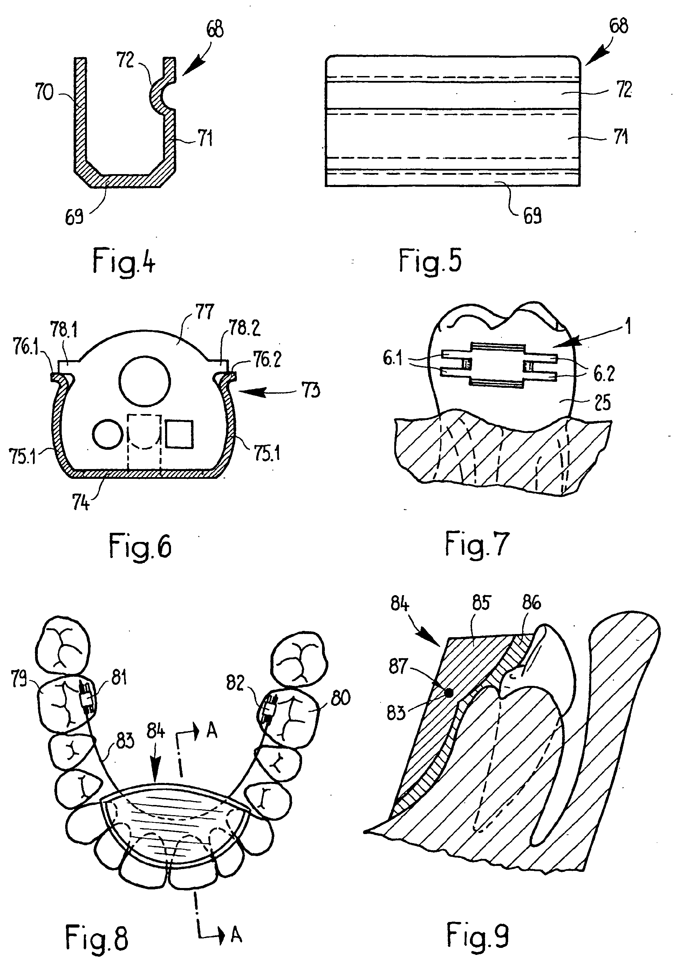

Figur 4 zeigt einen Querschnitt durch eine Halterung der erfindungsgemässen Vorrichtung mit einer okklusalen Aufnahme. Der Clip 68 umfasst eine Basis 69, eine Seitenwand 70 und eine Seitenwand 71. Zur Schaffung eines Einschnappmechanismus weist die Seitenwand 71 einen Vorsprung 72 auf. Der Vorsprung 72 ist vorzugsweise in der gleichen Art wie die Vorsprünge 4.1 und 4.2 des Clips 1 ausgebildet. Da der Clip 68 mit der Seitenwand 70 am Zahn befestigt wird, entsteht eine okklusale Ausrichtung der Aufnahme des Clips 68 und ein Anschlusselement kann von oben eingesetzt werden. Um eine grösstmögliche Kontaktfläche zwischen dem Clip 68 und der Zahnoberfläche zu schaffen, weist die Seitenwand 70 keinen Vorsprung auf. Der Clip 68 kann in einer Variante derart am Zahn befestigt werden, dass ein Anschlusselement von unten eingesetzt werden kann. Die Seitenwand 70 kann wie die Basis 2 Laschen aufweisen, welche die Kontaktfläche zwischen dem Zahn und dem Clip 69 vergrössern.

Eine Seitenansicht einer Halterung der erfindungsgemässen Vorrichtung ist in Figur 5 dargestellt. In dieser Ansicht ist der Vorsprung 72 von der Seitenwand 71 her gesehen konvex ausgebildet. Bei einer derartigen Befestigung des Clips 68, bei der eine okklusale Ausrichtung der Aufnahme geschaffen wird, sind vorzugsweise keine Halteteile an der Basis 69 angeordnet. Weiter ist bei den im Normalfall vorhandenen Belastungen auf den Clip 68 die Anordnung von Laschen nicht notwendig. Werden Laschen benötigt, dann werden diese bei der vorliegenden Ausgestaltung der erfindungsgemässen Vorrichtung in Längsrichtung der Seitenwand 70 angeordnet. Die Befestigung des Clips 68 am Zahn erfolgt vorzugsweise mit einer geeigneten Klebetechnik. Der Clip 68 kann auch an einem Zahnband aufgelötet oder aufgeschweisst sein. Wie der Clip 1 wird der Clip 68 bevorzugt aus einem Werkstück hergestellt.

Figur 6 stellt einen Querschnitt durch eine Variante der Halterung der erfindungsgemässen Vorrichtung dar. Wie bei den bisher beschriebenen Clips umfasst Clip 73 eine Basis 74 und zwei Seitenwände 75.1 und 75.2. Bei dieser Ausführungsform sind die Seitenwände 75.1 und 75.2 auf den Querschnitt gesehen nach aussen gewölbt. Die freien Enden 76.1 und 76.2 sind nach aussen abgebogen. Das Anschlusselement 77 ist entsprechend dem Clip 73 ausgebildet und weist gemäss den zu befestigenden Mitteln zur Korrektur ausgebildete Öffnungen auf. Das Anschlusselement bildet mit Vorsprüngen 78.1 und 78.2 die zur bevorzugten Art der Fixierung benötigte Nuten am Anschlusselement 77. Diese Vorsprünge 78.1 und 78.2 können über die Länge der umgebogenen freien Enden 76.1 und 76.2 hinaus verlängert werden. Dadurch wird eine Abdeckung des meistens aus Metall hergestellten Clips 73 geschaffen, welche ästhetisch vorteilhaft ist. Vorzugsweise wird das Anschlusselement 77 aus einem zahnfarbenen Material hergestellt.

Eine Ansicht eines Zahns mit einer aufgeklebten Halterung der erfindungsgemässen Vorrichtung ist in Figur 7 gezeigt. Der Clip 1 - hier in einer Draufsicht dargestellt - ist beispielsweise auf einem Molar 25 lateral aufgeklebt. Der dargestellte Clip 1 weist zur Vergrösserung der Kontaktfläche zwischen dem Clip 1 und dem Molar 25 an der Basis angeordnete Laschen 6.1 und 6.2 auf.

In Figur 8 ist eine Draufsicht auf einen Unterkiefer mit einem seitlichen Aufbiss gezeigt, welcher an den Incisivi angeordnet ist. An den Molaren 79 und 80 sind jeweils lingual die Vorrichtungen 81 und 82 aufgeklebt. Die Anschlusselemente der Vorrichtungen 81 und 82 fixieren den Draht 83, welcher den seitlich an den Incisivi angeordneten Aufbiss 84 in Position hält.

Einen Querschnitt durch einen Incisivus entlang der Schnittlinie A-A der Figur 8 wird in Figur 9 gezeigt. Der lingual angeordnete, erfindungsgemässe Aufbiss 84 ist bevorzugt ein Halbfabrikat. Die Tragschicht 85 besteht vorzugsweise aus einem harten Kunststoff, welcher an der den Zähnen zugeordneten Seite eine durch Druck verformbare zweite Schicht 86 aufweist. Der Aufbiss 84 wird im Mund des Patienten angepasst und anschliessend, beispielsweise durch Lichtpolymerisation gehärtet. In der Tragschicht 85 des Aufbisses 84 ist eine Bohrung 87 angeordnet, in welcher der Draht 83 hindurchgeführt wird. Durch diesen Draht 83 wird der Aufbiss 84 in der gewünschten Position gehalten.

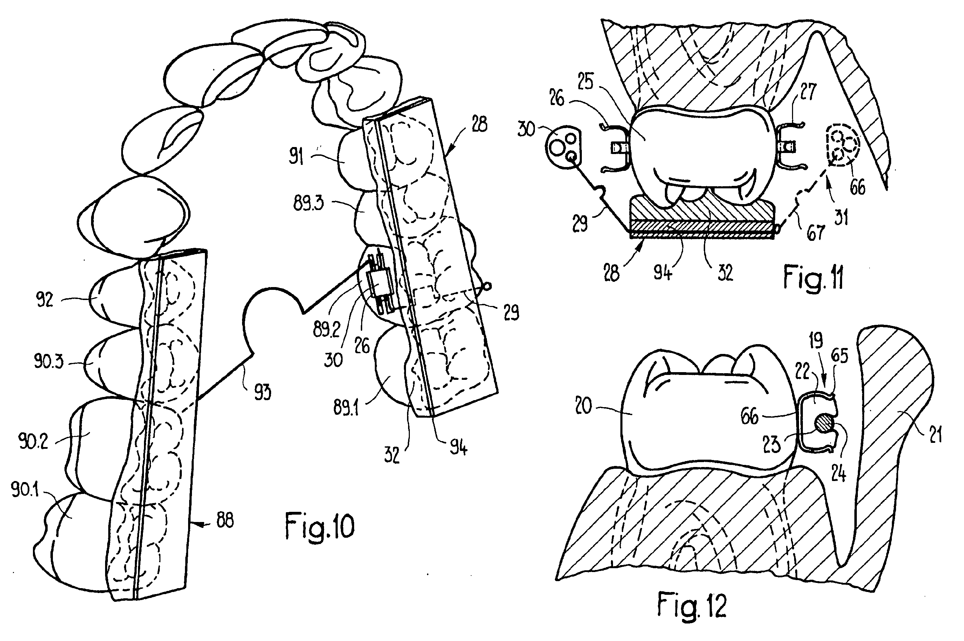

Eine perspektivische Draufsicht auf einen Oberkiefer mit zwei erfindungsgemässen, okklusal angeordneten Aufbissen auf den Molaren und den hintersten Prämolaren stellt Figur 10 dar. Der Aufbiss 28 ist auf den Molaren 89.1, 89.2 und 89.3, sowie auf dem Prämolar 91 angeordnet. Der Aufbiss 88 verläuft vom hintersten Molar 90.1 bis und mit dem Prämolar 92. An dem Molaren 89.2 ist palatinal die erfindungsgemässe Vorrichtung 30 angeordnet. Infolge der Art der Darstellung ist die ebenso palatinal am Molar 90.2 angeordnete erfindungsgemässe Vorrichtung nicht erkennbar. Zwischen den Vorrichtungen verläuft ein Palatinalbogen 93. Jedes der eingesetzten Anschlusselemente ist mit mindestens zwei Öffnungen versehen, in welchen einerseits die Enden des Palatinalbogens 93 und die Befestigungselemente des Aufbisses 28 bzw. 88 fixiert werden können.

Bei den erfindungsgemässen Aufbissen 28 und 88 handelt es sich um Halbfabrikate, welche durch den Zahnarzt angepasst werden können. Es können so genannte Standardtypen des Halbfabrikats fabrikmässig für die häufigsten Anwendungen dem Zahnarzt zur Verfügung gestellt werden. Der Zahnarzt schneidet das Halbfabrikat in seinen Abmessungen bezogen auf den Einsatzort zurecht und kontrolliert das Zwischenprodukt direkt im Mund des Patienten. Die Aufbisse 28 und 88 bestehen vorzugsweise aus Kunststoff, wobei die der okklusalen Fläche des Zahns zugewandte Aufbissfläche 32 durch Druck verformbar ist. Nach dieser Anpassung härtet der Zahnarzt den Aufbiss 28 bzw. 88, beispielsweise durch Lichtpolymerisation oder Photopolymerisation aus. Somit kann in vielen Anwendungen auf Spezialanpassungen verzichtet werden, welche nur ein Zahntechniker erstellen kann. Dies wirkt sich insbesondere auf der Kostenseite positiv für den Patienten und die Krankenkassen aus. Neben den Vorteilen für die Zahnärzte sind die Halbfabrikate auch für die Zahntechniker vorteilhaft, da sich bei Massenprodukten die Einzelpreise gegenüber Einzelanfertigungen wesentlich reduzieren. Die Dauer für die einzelnen Arbeiten der Zahntechniker können reduziert werden, was zu einem höheren Gesamtausstoss der handwerklichen Produktion führt. Der Einsatzbereich von Halbfabrikaten ist nicht nur auf Anwendungen für Aufbisse beschränkt. Auch Drähte oder ganze Korrekturbögen können vorfabriziert und auf die spezielle Anwendung angepasst werden.

Figur 11 zeigt eine Ansicht eines Zahns mit der erfindungsgemässen Vorrichtung in Funktion eines Aufbisses. Der erfindungsgemässe Aufbiss 28 ist auf der okklusalen Fläche des Molars 25 angeordnet. Wie der Aufbiss 84 (siehe Fig. 9) umfasst auch der Aufbiss 28 eine Tragschicht 94, auf welcher in Richtung der Zahnfläche - hier Molar 25 - die zweite, verformbare Schicht 32 angeordnet ist. Mit einem Draht 29 ist der Aufbiss 28 über ein Anschlusselement 30 gehalten, welches in der bereits mehrmals beschriebenen Art und Weise im Clip 26 eingeschnappt ist. Zusätzlich kann der Aufbiss 28 durch eine zweite Vorrichtung 31 - hier als zusätzliche Variante gestrichelt dargestellt - gegen Verschiebungen gehalten sein, welche einen Clip 27, ein Anschlusselement 66 und einen Draht 67 umfasst. Die zusätzliche zweite Vorrichtung 31 muss nicht zwingend am gleichen Zahn gegenüber dem ersten Clip 26 befestigt werden. Die zweite Vorrichtung 31 kann auch an einem benachbarten Zahn, beispielsweise an einem Prämolar, befestigt sein. Weiter muss die zweite Vorrichtung 31 nicht zwingend an der Seite befestigt werden, welche der ersten Vorrichtung gegenüberliegt. Die Befestigung zweier Vorrichtungen kann somit lingual bzw. palatinal und/oder buccal angeordnet sein. An einem Molar 25 kann ein Clip (wie Clip 68 in Fig. 4) befestigt werden, dass die Aufnahme des Clips okklusal ausgerichtet ist. Wenn zwei Clips - im Sinne von Clip 26 und 27 - angeordnet werden, kann ein, beziehungsweise auch beide Clips durch einen Clip mit einer okklusal ausgerichteten Aufnahme ersetzt werden. Die Wahl der Art des Clips ist durch den Einsatz und die vorhandenen Möglichkeiten bestimmt.

Die Darstellung in Figur 12 zeigt eine Ansicht eines Zahns mit der erfindungsgemässen Vorrichtung in Funktion eines Brackets. Die Vorrichtung 19 ist in diesem Beispiel buccal an einem Prämolar 20 angeordnet, was durch die schematische Darstellung der Lippe 21 verdeutlicht wird. Die Vorrichtung 19 umfasst den Clip 65 und ein Anschlusselement 22. Das Anschlusselement 22 weist einen Schlitz 23 auf, in welchem der Draht 24, beispielsweise ein Korrekturbogen, gehalten wird. Der Clip 65 ist an seiner Basis 66 mit einem adhäsiven Mittel, beispielsweise einem Haftmittel, am Prämolar 20 befestigt.

In den Figuren 13a bis 13e ist jeweils eine Draufsicht auf einen Kiefer mit verschiedenen Anwendungsbeispielen der erfindungsgemässen Vorrichtung gezeigt. Diese Anwendungsbeispiele dienen der Verdeutlichung der modularen Einsatzfähigkeit der erfindungsgemässen Vorrichtung und sind nicht abschliessend.

In der Figur 13a ist ein Oberkiefer gezeigt, in welchen ein Palatinalbogen 33 mit zwei erfindungsgemässen Vorrichtungen 34 und 35 gehalten ist. Die Vorrichtungen 34 und 35 sind palatinal an den Molaren 36 und 37 mit einem adhäsiven Mittel befestigt. Beispielsweise werden die Anschlusselemente für die Vorrichtungen 34 und 35 mit Bohrungen versehen, in welchen der Palatinalbogen 33 eingesetzt wird.

Figur 13b zeigt eine Kombination verschiedener Korrekturhilfen beispielhaft am Unterkiefer. An den Molaren 38 und 39 sind jeweils zwei erfindungsgemässe Vorrichtungen 40.1 und 40.2, beziehungsweise 41.1 und 41.2 lingual und buccal angeordnet. Die Vorrichtungen 40.1 und 41.1 halten einen Labialbogen 42. Am Labialbogen 42 sind zwei Aufbisse 45.1 und 45.2 seitlich an den Molaren 43 und 44 angeordnet. An den lingual angeordneten Vorrichtungen 40.2 und 41.2 ist ein Lingualbogen 46 befestigt.

In einem weiteren Ausführungsbeispiel an einem Oberkiefer sind jeweils an den Molaren 36 und 37 die Vorrichtungen 47 und 48 palatinal angeordnet (siehe Figur 13c). Die Öffnungen dieser Vorrichtungen 47 und 48 sind hier okklusal ausgerichtet. Die Anschlusselemente weisen jeweils zwei Befestigungsmöglichkeiten - beispielsweise Bohrungen - auf, in welchen ein Palatinalbogen 49 und für die Ausrichtung der Molare 50 und 37 buccal Aufbisse 51 und 52 angeordnet sind. Die okklusal ausgerichtete Öffnung des Clips erleichtert im Wesentlichen die Befestigung der Aufbisse 51 und 52. Trotzdem kann mit der erfindungsgemässen Vorrichtung auch der Palatinalbogen 49 gehalten werden.

In Figur 13d werden zwei lingual angeordnete Vorrichtungen 53 und 54 an einem Unterkiefer gezeigt, welche an den Molaren 38 und 39 befestigt sind. Die Clips der Vorrichtungen 53 und 54 weisen jeweils okklusal ausgerichtete Öffnungen auf, in welchen die okklusal angeordneten Aufbisse 55 und 56 gehalten werden. Die Aufbisse 55 und 56 werden vorzugsweise aus Halbfabrikaten hergestellt. Diese Halbfabrikate werden in ein paar wenigen Standardgrössen hergestellt und direkt durch den Zahnarzt in ihren Abmessungen im Mund des Patienten angepasst. In diesem Beispiel deckt der Aufbiss 55 alle Molaren auf der rechten Seite ab. Der Aufbiss 56 deckt nur die beiden hinteren Molaren auf der linken Seite des Unterkiefers ab. Gemäss dem Orientierungssystem zur dokumentarischen Darstellung der menschlichen Zähne gemäss der FDI (Federation Dentaire International) erfolgt die Darstellung der Zähne aus der Sicht des Betrachters - also auf das Gesicht des Patienten. Es ergibt sich daraus eine Seitenvertauschung Rechts-Links bei der Schreibweise.

Die erfindungsgemässen Aufbisse 55 und 56 werden durch den Zahnarzt im Mund des Patienten angepasst und von ihm selbst in der Zahnarztpraxis beispielsweise durch Lichtpolymerisation gehärtet. Anschliessend wird der Aufbiss 55 bzw. 56 mit dem Anschlusselement in der entsprechenden Vorrichtung 53 bzw. 54 eingeschnappt und somit gehalten. Der Zahnarzt kann direkt die Passform des Korrekturmittels kontrollieren und gegebenenfalls selbst noch leichte Anpassungen vornehmen.

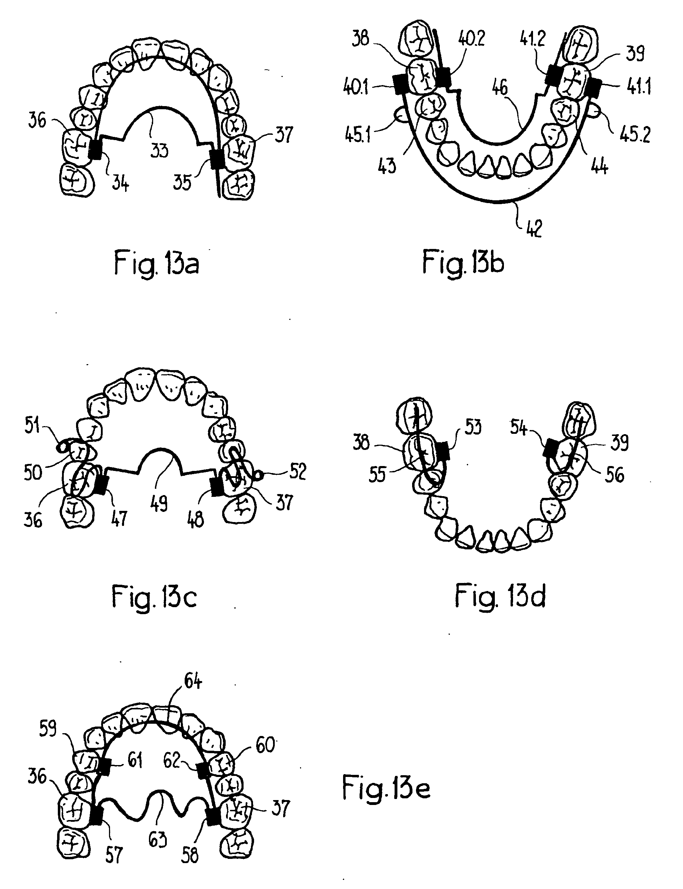

Figur 13e zeigt eine weitere Anwendung der erfindungsgemässen Vorrichtung an einem Oberkiefer. An den Molaren 36 und 37 sind palatinal die Vorrichtungen 57 und 58 befestigt. An den Prämolaren 59 und 60 sind zwei weitere palatinal angeordnete Vorrichtungen 61 und 62 angebracht. An den Vorrichtungen 57 und 58 wird einerseits ein Palatinalbogen 63 und andererseits ein Innenbogen 64 befestigt, welcher von der Vorrichtung 57 über die Vorrichtungen 61 und 62 zu der Vorrichtung 58 verläuft. Damit können die Prämolare 59 und 60 entsprechend der gewünschten Wirkung korrigiert werden.

Das Drahtmaterial des Innenbogens 64 und/oder des Palatinalbogens 63 ist in dieser Ausführungsform ein so genannter Thermodraht. Der Thermodraht ist im Querschnitt wesentlich dünner ausgebildet als die herkömmlichen, in der Orthodontie verwendeten Querschnitte der Drähte. Der Thermodraht wird entsprechend den örtlichen Gegebenheiten und der Funktion des Drahtes beispielsweise am Gebiss des Patienten angepasst und ausserhalb der Mundhöhle beispielsweise elektrothermisch erwärmt. Nach der Abkühlung behält der Thermodraht seine, vor dem erwärmten Zustand hergestellte, Form bei. Auch wenn der abgekühlte Thermodraht gebogen oder gefaltet wird, nimmt er die zuvor ausgestaltete Form wieder an. Daneben sind Thermodrähte hoch belastbar. Somit können auch komplexere Ausgestaltungen erstellt werden, als es mit den herkömmlichen in der Orthodontie verwendeten Drähten möglich ist. Weiter ist die Verwendung von Thermodrähten bevorzugt, wenn ein entsprechend instruierter Patient das Mittel zur Korrektur selbst entfernen und wieder einsetzen kann.

Bei einer Korrekturhilfe mit einem Thermodraht werden die Clips der Vorrichtungen 57, 58, 61 und 62 beispielsweise an den Molaren 36 und 37 beziehungsweise an den Prämolaren 59 und 60 angebracht. Die Vorrichtungen 57, 58, 61 und 62 bestehen jeweils aus einem Clip und einem Anschlusselement. Die Anschlusselemente der Vorrichtungen 57 und 58 sind derart ausgebildet, dass sie einerseits eine Befestigungsmöglichkeit für den Palatinalbogen 63 und andererseits eine Befestigungsmöglichkeit für den Innenbogen 64 aufweisen. Die Anschlusselemente der Vorrichtungen 61 und 62 nehmen nur den Innenbogen 64 auf, weshalb sie vorzugsweise entsprechend ihrer Funktion und somit unterschiedlich gegenüber den Anschlusselementen der Vorrichtungen 57 und 58 ausgestaltet sind. So können diese Anschlusselemente der Vorrichtungen 61 und 62 nur eine Führungsfunktion für den Innenbogen 64 übernehmen, da der Innenbogen 64 mit den Anschlusselementen der Vorrichtungen 57 und 58 gehalten ist.

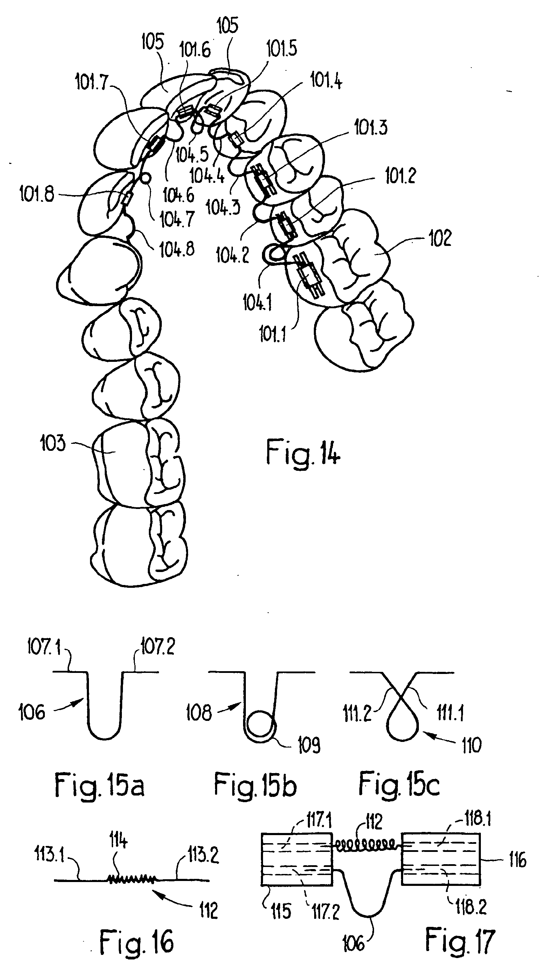

In Figur 14 ist eine perspektivische Draufsicht auf einen Oberkiefer mit einem palatinal angeordneten, aus einzelnen Schlaufen zusammengesetzten Korrekturbügel gezeigt. Von Molar 102 bis Molar 103 sind jeweils an jedem Zahn die Halterungen 101.1 bis 101.n beispielsweise mit einem ädhesiven Mittels aufgeklebt. Im Gegensatz zu einer Ausführung mit einem durchlaufenden Draht sind die Anschlusselemente in den Halterungen 101.1 bis 101.n mit einzelnen, gegebenenfalls unterschiedlich ausgeformten Drahtschlaufen 104.1 bis 104.n verbunden. Die Drahtschlaufen 104.1 bis 104.n sind an den Anschlusselementen bevorzugt angelasert. Eine Befestigungsvariante ist, die einzelnen Drahtschlaufen 104.1 bis 104.n an den Anschlusselementen anzukleben oder in entsprechende Öffnungen in den Anschlusselementen einzuklemmen.

Die erfindungsgemässe Vorrichtung wurde zuvor in einem Setup entspannt, welches die gewünschte Stellung der Zähne des Patienten darstellt. Wird nun die Vorrichtung mit den Anschlusselementen in den Halterungen 101.1 bis 101.n im Mund des Patienten eingesetzt, entwickeln die Drahtschlaufen 104.1 bis 104.n ihre volle Spannkraft und üben auf die bezüglich ihrer Stellung zu korrigierenden Zähne die nötige Kraft aus.

Der wesentliche Vorteil dieser Ausführung gegenüber einer Lösung mit einem durchlaufenden Draht liegt in der verbesserten Flexibilität. Insbesondere wenn die Zahnstellung grosse Anomalien aufweist kann gegebenenfalls nicht an jedem zu richtenden Zahn zu Beginn der Behandlung eine Halterung befestigt werden. Beispielsweise kann an dem Incisivus 105 aus Platzgründen die Halterung 101.5 nicht befestigt werden, da der benachbarte Incisivus 106 überlappend mit dem Incisivus 105 steht. Bei der ersten angeordneten Vorrichtung wird der Incisivus 105 übersprungen und die Anschlusselemente in den Halterungen 101.4 und 101.6 werden mit nur einer Drahtschlaufe (hier nicht dargestellt) verbunden. Wurde der Incisivus 106 derart vorgerichtet, dass am Incisivus 105 die Halterung 101.5 befestigt werden kann, wird die die Anschlusselemente in den Halterungen 101.4 und 101.6 verbindende Drahtschlaufe entfernt und durch die zwei Drahtschlaufen 104.5 und 104.6 ersetzt. Die gesamte Vorrichtung wird für diesen Vorgang aus den Halterungen 101.1 bis 101.n entfernt und anschliessend in die gleichen Halterungen 101.1 bis 101.n eingesetzt.

Beispielhafte Ausbildungen der in Figur 14 beschriebenen Drahtschlaufen 104.1 bis 104.n sind in den Figuren 15a-c im Detail gezeigt. Diese Figuren dienen nur dem besseren Verständnis und die gezeigten Ausbildungen der Drahtschlaufen ist nicht abschliessend. Als Material für die Drahtschlaufen wird vorzugsweise - wie bereits ausgeführt wurde - Thermodraht verwendet. Es können weiter auch federhart gebogene Edelstähle zur Herstellung der Drahtschlaufen verwendet werden.

Figur 15a zeigt die Drahtschlaufe 106, welche im Wesentlichen U-förmig gebogen ist und zwei, nach aussen gerichtete Anschlussabschnitte 107.1 und 107.2 aufweist. Die Anschlussabschnitte 107.1 und 107.2 dienen - wie auch die bei den anderen, nachfolgend gezeigten Ausführungsformen der Drahtschlaufen in den Figuren 15b+c Anschlussabschnitte - der Befestigung der Drahtschlaufen an den Anschlusselementen, welche ihrerseits in den Halterungen eingeklickt werden.

Die Drahtschlaufe 108, welche in Figur 15b dargestellt ist, weist an der Basis 109 eine volle Umwicklung des Drahtmaterials auf. Bei der Drahtschlaufe 110 in der Figur 15c überkreuzen sich die Schenkel 111.1 und 111.2. Die Ausgestaltung der Drahtschlaufen 106, 108 und 110 ist im Wesentlichen von den erforderlichen Korrekturkräften abhängig, welche sie auf die entsprechenden Zähne ausüben müssen, und kann entsprechend den örtlichen Gegebenheiten variiert werden.

Eine weitere Variante eines Korrekturdrahtes ist in einem Detail in Figur 16 schematisch dargestellt. Der Korrekturdraht 112 ist in seiner Funktion mit einer Drahtschlaufe vergleichbar, wie sie zuvor beschrieben wurde. Zwischen den Anschlussabschnitten 113.1 und 113.2 ist ein flexibler Abschnitt 114 angeordnet. Der flexible Abschnitt 114 ist beispielsweise als ein Federelement ausgebildet. Der Korrekturdraht 112 wird analog einer Drahtschlaufe im Setup entspannt und an den entsprechenden Anschlusselementen befestigt sowie zusammen mit diesen in die entsprechenden, bereits an den Zähnen befestigten Halterungen eingesetzt. So entwickelt der Korrekturdraht seine volle Spannkraft und leitet die gewünschte Korrektur der entsprechenden Zähne ein. Auch der Korrekturdraht 112 kann ein sogenannter Thermodraht sein.

Figur 17 zeigt eine Detailansicht auf zwei erfindungsgemässe Anschlusselemente mit zwei beispielhaften, an diesen Anschlusselementen befestigten Korrekturdrahtabschnitten. Mehrere, an Anschlusselemente befestigte, aneinandergereihte Korrekturdrahtabschnitte ergeben einen aus mehreren Teilen zusammengesetzten Korrekturbügel, wie er unter den Ausführungen zur Figur 14 beschrieben wurde. Die Anschlusselemente 115 und 116 sind jeweils mit zwei Bohrungen 117.1 und 117.2 bzw. 118.1 und 118.2 versehen, die in ihrer Grösse und Ausgestaltung auf die Anschlussabschnitte der an den Anschlusselementen 115 und 116 befestigten Korrekturdrahtabschnitte (hier die Drahtschlaufe 106 und der Korrekturdraht 112) abgestimmt sind.

In Abhängigkeit der gewünschten Korrektur, welche auf den zu richtenden Zahn wirken soll, können verschiedene Korrekturdrahtabschnitte an den Anschlusselementen (z. B. 115 und 116) kombiniert werden. Weiter ist es denkbar, mehr als zwei Korrekturdrähte an einem Anschlusselement zu befestigen. Die Anzahl der Bohrungen im einzelnen Anschlusselement wird entsprechend der Anzahl der zu befestigenden Korrekturdrahtabschnitte an diesem Anschlusselement angepasst.

Werden einzelne Zähne bei einem ersten Behandlungsschritt übersprungen, kann das gesamte Mittel zur Korrektur - hier beispielsweise ein Korrekturbogen - aus dem Mund des Patienten entfernt, angepasst und anschliessend in die gleichen Halterungen - den sogenannten Clips - wieder eingesetzt werden.

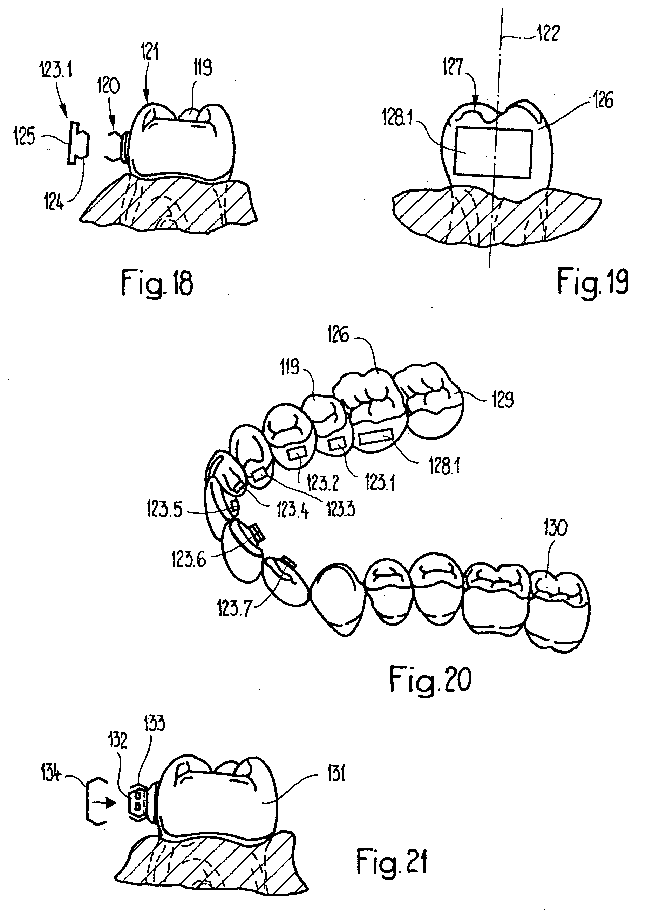

Eine weitere Ausführungsform der Vorrichtung zeigt Figur 18 in einer Ansicht eines Zahns mit einem erfindungsgemässen Übertragungselement und einer Halterung. Zu Beginn der Behandlung einer anomalen Zahnstellung wird an jedem für die Korrektur benötigten Zahn ein Clip befestigt. Beispielhaft ist der Clip 120 gezeigt, welcher auf den Molar 119 aufgeklebt wurde. Alle an den Zähnen zu befestigenden Clips werden weitgehend mit gleichen Parametern an der entsprechenden Zahnoberfläche positioniert. Der Clip 120 wird rechtwinklig zur Achse des Zahns in einem gleichmässigen Abstand von beispielsweise 1.5 - 4.0 mm zur Incisialkante 121 des entsprechenden Zahns 119 aufgeklebt. Dazu kann eine - hier nicht dargestellte - Positionierungshilfe verwendet werden.

In den am Molar 119 befestigten Clip 120 wird ein Übertragungselement 123.1 eingesetzt. Das Übertragungselement 123.1 weist einen Kopplungsabschnitt 124 auf, welcher weitgehend einem Anschlusselement entspricht und in seinen Abmessungen auf den Clip 120 ausgebildet ist, so dass das Übertragungselement 123.1 in diesen eingesetzt werden kann und für die weiteren Arbeitsschritte gehalten ist. Weiter weist das Übertragungselement 123.1 einen Haftungsbereich 125 auf, an welchem die Übertragungshilfe (hier nicht dargestellt) haftet. Der Haftungsbereich 125 verfügt über den Clip 120 vorstehende Bereiche, damit eine grosse Kontaktfläche des Übertragungselements 123.1 für die Übertragungshilfe gegeben ist. Die Oberflächen, zumindest des Haftungsbereichs 125, des Übertragungselements 123.1 sind vorbehandelt, so dass diese Oberflächen bessere Haftungseigenschaften aufweisen.

Eine Ansicht eines Zahns mit einem eingesetzten Übertragungselement ist in Figur 19 dargestellt. Am Molar 126 wurde wie beim in Figur 18 beschriebenen Molar 119 ein Clip (hier nicht dargestellt) im gleichen Abstand zur Incisialkante 127 und senkrecht zur Achse 122 des Molars 126 befestigt. Mit gleichem Abstand zur Incisialkante 127 ist der Betrag in Millimetern gemeint, in welchem die anderen Clips im Abstand zur Incisialkante des entsprechenden Zahns befestigt sind. Im Clip wurde das Übertragungselement 128.1 eingesetzt. Da insbesondere die hinteren Molaren, wie der Molar 126, eine im Vergleich zu den vorderen Zähnen grosse Zahnoberfläche aufweisen und die hinteren Molaren, wie der Molar 126, zumeist als Verankerung der Mittel zur Korrektur dienen, können an diesen grössere Clips als bei den vorderen Zähnen befestigt werden, wodurch auch grössere Kräfte von diesen Clips an den Molaren übernommen werden können. Entsprechend der grösseren Ausgestaltung des Clips weisen die Übertragungselemente - hier das Übertragungselement 128.1 - grössere Abmessungen als beispielsweise das Übertragungselement 123.1 auf.

Anhand der Figur 20 wird nachfolgend die Vorgehensweise zur Erstellung eines Modells gezeigt. Die Figur 20 stellt eine perspektivische Draufsicht auf einen Unterkiefer mit lingual angeordneten Halterungen und eingesetzten Übertragungselementen dar. An allen Zähnen - mit Ausnahme der hintersten Molaren 129 und 130 - wurden senkrecht zur jeweiligen Zahnachse und im gleichmässigen Abstand zur entsprechenden Incisialkante Clips an den Zahnoberflächen aufgeklebt. Bereits beim Aufkleben der Clips bzw. Halterungen bemerkt der Zahnarzt beziehungsweise der Kieferorthopäde allfällige Platzprobleme, z. B. infolge einer starken Anomalie eines Incisivus, und kann entsprechende Massnahmen bereits zu diesem Zeitpunkt dem Zahntechniker mitteilen, beziehungsweise weitere Behandlungsmassnahmen in die Wege leiten. Sobald alle Clips an den Zähnen befestigt sind, werden in diese die Übertragungselemente 123.1 bis 123.n bzw. 128.1 eingesetzt.

Der Zahnarzt beziehungsweise der Kieferorthopäde erstellt nun den Abdruck - die sogenannte Übertragungshilfe - beispielsweise mit einer Silikonmasse, welche an den Übertragungselementen 123.1 bis 123.n bzw. 128.1 haftet. Anschliessend wird die erstellte Übertragungshilfe (hier nicht dargestellt) aus dem Mund des Patienten entnommen, wobei die Übertragungselemente 123.1 bis 123.n bzw. 128.1 sich aus den Clips lösen und an der Übertragungshilfe haften. Die Clips verbleiben an den Zähnen des Patienten und dienen der Aufnahme der vom Zahntechniker, vom Zahnarzt oder Kieferorthopäden erstellten erfindungsgemässen Vorrichtung.

Die erstellte Übertragungshilfe wird an den Zahntechniker übergeben, welcher im zahntechnischen Labor an allen Übertragungselementen 123.1 bis 123.n bzw. 128.1 Clips einklickt. Aufgrund der daraus resultierenden Informationen erstellt der Zahntechniker ein genaues Gipsmodell des entsprechenden Kiefers mit den vorhandenen Zahnstellungen. Anschliessend wird durch den Zahntechniker ein individuelles Setup erstellt, welches die gewünschte Zahnstellung darstellt und zur Herstellung der benötigten Mittel zur Korrektur dient, welche zum Erreichen der gewünschten Zahnstellung nötig sind. Die Mittel zur Korrektur werden im Setup angepasst, entspannt und samt den Anschlusselementen, an welchen sie befestigt sind, aus dem Setup entnommen. Anschliessend wird die aus den Mitteln zur Korrektur und den Anschlusselementen bestehende Vorrichtung dem Zahnarzt beziehungsweise dem Kieferorthopäden übergeben, welcher die Vorrichtung in den bereits vorhandenen Clips an den Zähnen des Patienten mit wenigen Handgriffen einklickt. Die im Setup entspannten Mittel zur Korrektur entwickeln nach der Montage im Mund des Patienten ihre volle Spannkraft.

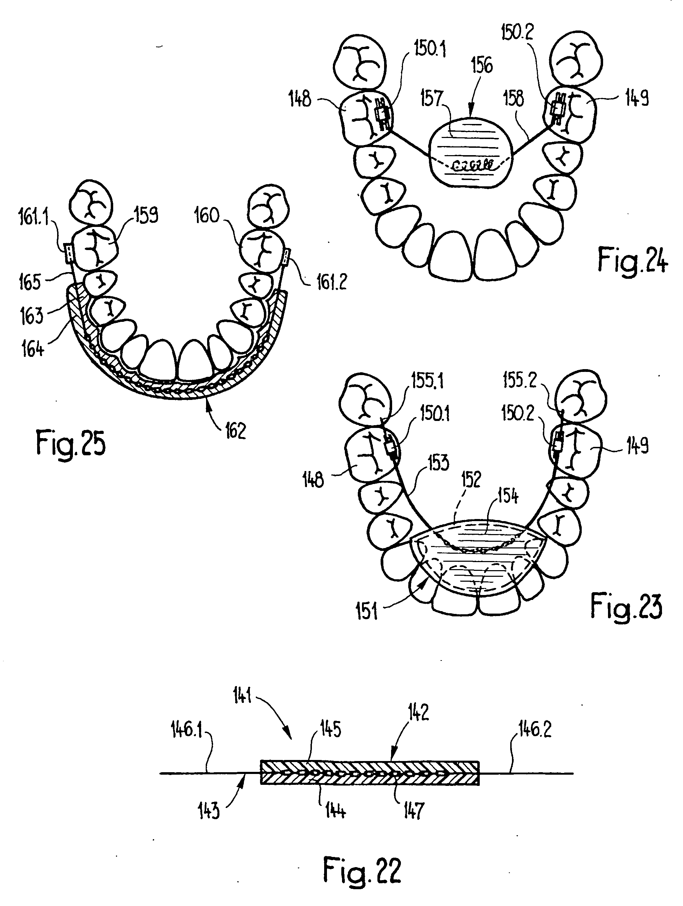

Figur 21 zeigt eine Ansicht eines Zahns mit einer Halterungsabdeckung. Ist die Spannkraft des Mittels zur Korrektur aufgrund der Anomalie der Zähne sehr gross, kann die vorhandene Klemmwirkung zwischen dem Clip und dem Anschlusselement nicht ausreichend sein, um den sicheren Halt der Vorrichtung an den Zähnen zu gewährleisten. Weiter ist bei starken Anomalien der Zähne der perfekte Sitz des Anschlusselements, an welchem das im Setup entspannte Mittel zur Korrektur befestigt ist, nicht in jeder Konstellation gegeben.

Zur Verbesserung der Klemmwirkung des Anschlusselements 132 im Clip 133, der vorgängig am Prämolar 131 befestigt wurde, ist eine Halterungsabdeckung aufgesteckt, eine sogenannte Clipklemme 134. Die Clipklemme 134 ist aus Metall, vorzugsweise aus dem gleichen Material wie der Clip 133, hergestellt und weist entsprechend der Ausgestaltung des Clips 133 eine Ausgestaltung auf, so dass die Clipklemme 134 formschlüssig am Clip 133 hält. Ist die erfindungsgemässe Vorrichtung vestibulär an den Zähnen angeordnet, können die sichtbaren Flächen der Clipklemme 134 mit einer zahnfarbenen Beschichtung versehen sein oder aus einem für die Klemmwirkung der Clipklemme 134 geeigneten, zahnfarbenen Material hergestellt sein, damit Dritten die angeordnete Korrekturvorrichtung weniger auffällt.

Jeder Kiefer ist individuell und vorfabrizierte, bereits ausgeformte Mittel zur Korrektur können nur bedingt verwendet werden. Figur 22 zeigt einen schematischen Schnitt durch erfindungsgemässe flexible Kunststoffelemente mit einem Trägerdraht, welche individuell anpassbar sind. Das schematisch dargestellte, für verschiedenste Anwendungen einsetzbare Mittel zur Korrektur 141 umfasst im Wesentlichen flexibel verformbaren, vorzugsweise lichthärtbaren Kunststoff 142 und einen Trägerdraht 143. Der Kunststoff 142 wird in zwei Teilmengen 144 und 145 im Mund des Patienten angepasst. Zuerst wird die erste Teilmenge 144 entsprechend ihrem Einsatzort an den Kiefer, beziehungsweise an die Zähne des Patienten angepasst. Anschliessend wird der Trägerdraht 143 in die noch verformbare erste Teilmenge 144 eingedrückt. Ist der Trägerdraht 143 positioniert, wird dieser im Bereich der ersten Teilmenge 144 durch eine zweite Teilmenge 145 des verformbaren Kunststoffs 142 überdeckt. Anschliessend erfolgt die Aushärtung des Kunststoffs 142 beispielsweise durch eine Lichtpolymerisation. Ist die Schichtstärke der ersten Teilmenge 142 derart gross, dass der darin positionierte Trägerdraht 143 vollständig und ohne den Patienten zu irritieren umschlossen wird, kann auf die Anordnung einer zweiten Teilmenge 145 verzichtet werden.

Der bevorzugt für diese Anwendung verwendete Trägerdraht 143 weist zwei im Wesentlichen starre Anschlussabschnitte 146.1 und 1460.2 auf, zwischen denen ein flexibler Abschnitt 147 vorgesehen ist. Der flexible Abschnitt 147 ist durch einzelne Kettenglieder gebildet, welche eine weitgehend freie Positionierung des Trägerdrahtes 143 in der ersten Teilmenge 144 des Kunststoffs 142 erlauben. Der Trägerdraht 143 kann durch Zusammenstossen der starren Anschlussabschnitte 146.1 und 146.2 verkürzt sowie entsprechend den örtlichen Gegebenheiten in einer Bogenlinie verlegt werden. Als eine Variante zu den einzelnen Kettengliedern könnte der flexible Abschnitt 147 des Trägerdrahtes 143 durch eine spiralfederähnliche Ausgestaltung gebildet werden. Zur Gewährleistung der Stabilität des beschriebenen Mittels zur Korrektur 141 umfasst zumindest die erste Teilmenge 144 einen Teil des an den flexiblen Abschnitt 147 angrenzenden, starren Anschlussabschnitts 146.1 bzw. 146.2 um etwa 1 bis 2 mm. Dadurch wird ein unbeabsichtigtes Verrutschen des Mittels zur Korrektur 141 in dessen üblichen Verwendung weitgehend verhindert.

Die nachfolgend beschriebenen Figuren 23, 24 und 25 zeigen beispielhafte - jedoch nicht abschliessende - Ausführungen des zuvor in Figur 22 beschriebenen, individuell erstellten Mittels zur Korrektur. Wie aus diesen Beschreibungen ersichtlich wird, sind den Anwendungen der erfindungsgemässen Vorrichtung kaum Grenzen gesetzt. Weiter können mehrere Mittel für Korrekturen kombiniert werden.

In Figur 23 ist eine Draufsicht auf einen Unterkiefer mit einem seitlichen Aufbiss an den Incisivi dargestellt. An den Molaren 148 und 149 wurden vorgängig die Clips 150.1 bzw. 150.2 lingual angeklebt. Für die Herstellung des Aufbisses 151 wird die erste Teilmenge 152 an den betroffenen Kieferbereich und an die Zähne angepasst. Danach wird der Trägerdraht 153 in der ersten Teilmenge 152 positioniert und ausgerichtet. Anschliessend wird die zweite Teilmenge 154 über den Trägerdraht 153 im Bereich der bereits angepassten ersten Teilmenge 152 aufgedrückt und die ganze Vorrichtung wird im oder ausserhalb des Mundes des Patienten lichtgehärtet. In einem nächsten Schritt werden über die freien Enden 155.1 und 155.2 des Trägerdrahtes 153 Anschlusselemente (hier nicht dargestellt) geschoben, welche in den Halterungen 150.1 bzw. 150.2 eingeklickt werden. Danach wird der Trägerdraht 153 gespannt und an den eingeklickten Anschlusselementen befestigt, beispielsweise angelasert. In einer Variante zur beschriebenen Ausführung kann der Trägerdraht 153 vor dem Befestigen der Anschlusselemente in den Halterungen 150.1 bzw. 150.2 an den Anschlusselementen befestigt werden. Damit kann gegebenenfalls eine hohe Spannkraft im Trägerdraht beim Einklicken der Anschlusselemente in den Halterungen 150.1 bzw. 150.2 erzeugt werden.

Eine andere Ausführung eines unter Figur 22 beschriebenen, individuellen Mittels zur Korrektur in einer "Nance"-Platten-ähnlichen Ausgestaltung ist in Figur 24 in einer Draufsicht auf einen Oberkiefer dargestellt. An den Molaren 148 und 149 sind die Clips 150.1 bzw. 150.2 angeklebt. (Die Bezugszeichenangabe ist bewusst gleich wie in der Figur 23 gewählt, da die Clips 150.1 und 150.2 für mehrere Korrekturen anwendbar sind, welche gleichzeitig oder zeitlich gestaffelt ausgeführt werden.) Das "Nance"-Platten-ähnliche Mittel zur Korrektur 156 wird durch die Menge 157 des entsprechenden verformbaren Kunststoffs ausgeformt. Der Trägerdraht 158 wird in der Menge 157 positioniert und dessen Enden werden für die anschliessende Befestigung des Trägerdrahtes 158 ausgerichtet. Bei dieser Ausführung kann gegebenenfalls das Mittel zur Korrektur 156 nur aus der Menge 157 des lichthärtenden Kunststoffmaterials gebildet werden, so dass der von der Menge 157 umschlossene Trägerdraht 158 nach der Aushärtung des Kunststoffs sicher gehalten ist. Die Enden des Trägerdrahtes 158 werden wieder mit hier nicht dargestellten Anschlusselementen in den Halterungen 150.1 und 150.2 befestigt.

Eine weitere Ausführung des in Figur 22 beschriebenen Prinzips ist in der Figur 25 mit einer Draufsicht auf einen Oberkiefer mit vestibulär angeordneten erfindungsgemässen flexibel angepassten Kunststoffelementen gezeigt. An den Molaren 159 und 160 sind buccal die Clips 161.1 und 161.2 befestigt. Der gezeigte, vestibulär angeordnete Aufbiss 162 wird in zwei Teilmengen 163 und 164 hergestellt, welche den Trägerdraht 165 umschliessen. Die freien Enden des Trägerdrahtes 165 werden mit hier nicht dargestellten Anschlusselementen in den Clips 161.1 bzw. 161.2 befestigt.

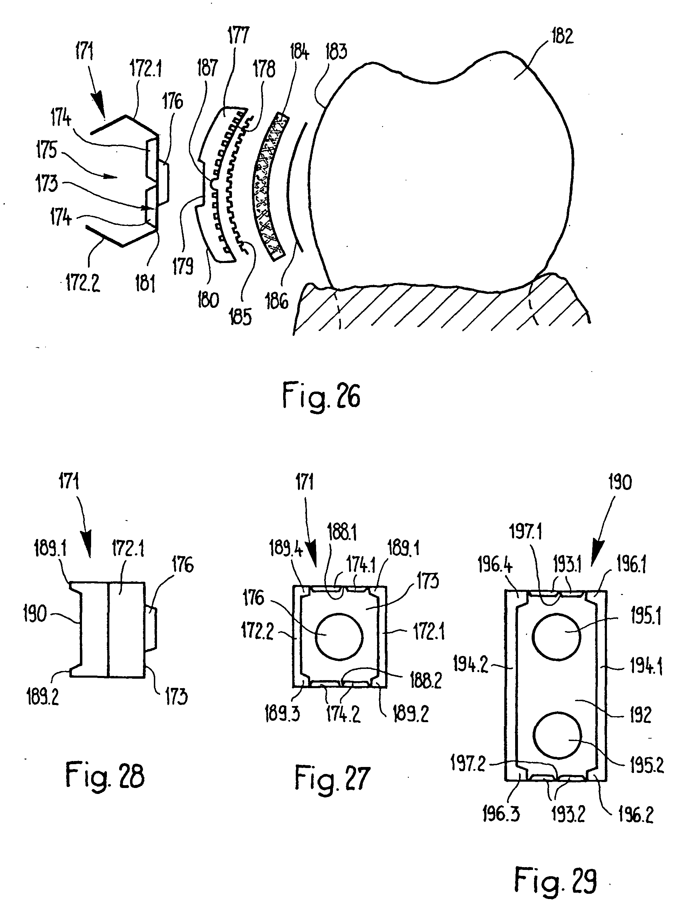

Figur 26 zeigt einen Aufbau einer Klebeverbindung zwischen einer direkt am Zahn befestigten Halterung (Clip) und einem Zahn. Der Clip 171 ist aus rostfreiem, bioverträglichem Stahl oder aus einem anderen geeigneten Material hergestellt. Der Clip 171 weist eine im Wesentlichen U-förmige Ausgestaltung mit zwei Seitenwänden 171.1 und 171.2 sowie der Basis 173 auf. Weiter sind an beiden Enden der Basis 173 in deren Längsrichtung Arretierungen 174 zur seitlichen Positionierung und Fixierung des - hier nicht dargestellten - Anschlusselements vorgesehen. Die Seitenwände 172.1 und 172.2 sind nach aussen abgewinkelt, so dass eine konvexe Ausgestaltung der Seitenwände 172.1 und 172.2 gegeben ist. Das hier nicht dargestellte Anschlusselement ist entsprechend der Aufnahme 175 des Clips 171 ausgeformt, damit beim Zusammensetzen des Anschlusselements und des Clips 171 eine formschlüssige, jedoch lösbare Klemmverbindung gegeben ist.

An der Basis 173 des Clips 171 ist eine Vertiefung 176 ausgebildet, welche der verbesserten Verbindung oder Verschweissung des Clips 171 mit dem Übergangsstück (Klebebasis 177) dient. Die Vertiefung 176 hat eine im Wesentlichen kreisrunde Grundrissform, deren Durchmesser etwa die Hälfte der kürzeren Länge der Basis 173 beträgt. Die Tiefe der Vertiefung 176 beträgt in den meisten Anwendungen weniger als 1 mm. Die genannten Werte sind beispielhaft und können in Abhängigkeit der örtlichen Gegebenheiten variiert werden. Die Vertiefung 176 ist vorzugsweise immer gleichartig ausgeformt und kann nach spezifischen Wünschen des Zahnarztes beziehungsweise des Kieferorthopäden angepasst werden.

Die Klebebasis 177 ist aus rostfreiem, bioverträglichem Stahl oder aus einem anderen geeigneten Material hergestellt. Die dem Zahn zugewandte Kontaktfläche 178 weist für einen verbesserten Halt mit dem Kleber Quer- und Längsrillen auf. Damit wird die Grösse der Kontaktfläche 178 wesentlich gegenüber einer Ausführung mit einer ebenen Oberfläche erhöht. Zusätzlich ist die Kontaktoberfläche 178 vorbehandelt, z. B. sandgestrahlt oder geätzt (Aluoxid). Die Vertiefung 179 an der Klebebasis 177 auf der dem Clip 171 zugewandten Fläche 180 ist in den Grundrissabmessungen auf die Vertiefung 176 in der Basis 173 des Clips 171 abgestimmt, weist jedoch eine geringere Tiefe (z. B. nur die Hälfte der Tiefe der Vertiefung 176 in der Basis 173) als diese auf. Es entsteht im zusammengesetzten Zustand zwischen dem Clip 171 und der Klebebasis 177 eine sogenannte Matrize/Patrize-Verbindung. Damit wird verhindert, dass der untere Längsfalz 181 des Clips 171 beim Einschieben des - hier nicht dargestellten - Anschlusselements in den Clip 171 in die Klebebasis 177 eindringt und der Einschub des Anschlusselements in die Aufnahme 175 des Clips 171 gegebenenfalls behindert wird.

Weiter ist an der Kontaktfläche 178 eine Ausnehmung 187 als Entfernungshilfe zum Entfernen des Clips 171 vom Zahn 182, z. B. mit einer Zange, Pinzette oder einem anderen geeigneten Hilfsmittel, ausgebildet.

Die Klebebasis 177 erfüllt im Wesentlichen zwei Funktionen. Die Wirkung der Matrize/Patrize-Verbindung zwischen dem Clip 171 und der Klebebasis 177 gewährleistet eine gewisse Anpassungsfähigkeit der erfindungsgemässen Vorrichtung und verhindert, dass unerwünschte Klebematerialreste bzw. Kleberüberschuss in die Aufnahme 175 des Clips 171 eindringen. Weiter ist die benötigte Klebermenge zur Befestigung des Clips 171 am Zahn 182 gegenüber einer direkten Befestigung des Clips 171 am Zahn 182 sehr reduziert, da die Klebebasis 177 an der Kontaktfläche 178 konkav ausgestaltet ist. Da der Zahn 182 im Wesentlichen konvexe Oberflächen an seinen Seiten aufweist, wird mit weniger Klebematerial der nötige Ausgleich zwischen der Zahnoberfläche 183 und der Kontaktfläche 178 geschaffen. Zur Vereinfachung der Herstellung der Klebebasis 177 und im Hinblick auf einen minimalen Materialverbrauch ist die gesamte Klebebasis 177 leicht gebogen, so dass die Kontaktfläche 178 konvex und die gegenüberliegende Fläche 180 konkav ist.

Jede Zahnoberfläche 183 hat eine individuelle Raumform, weshalb die rein konkave Ausgestaltung der Kontaktfläche 178 der Klebebasis 177 nur bedingt die Erfordernisse an einen sparsamen und optimalen Materialverbrauch erfüllt. Zum Ausgleich allfälliger Unebenheiten ist zusätzlich eine anpassbare Ausgleichsschicht 184 vorgesehen. Die Ausgleichsschicht 184 ist aus einem verformbaren, lichthärtenden Kunststoff hergestellt und einseitig mit der Kontaktfläche 178 der Klebebasis 177 verbunden bzw. verklebt. Zur Verbesserung dieser geklebten Verbindung zwischen zumeist zwei unterschiedlichen Materialien kann ein dünner oder dünnflüssiger Metall-Kunststoff Primerfilm 185 auf die zu verbindenden Flächen aufgebracht werden.

Die anpassbare Ausgleichsschicht 184 weist im Grundriss bevorzugt die gleichen Abmessungen wie die Kontaktfläche 178 der Klebebasis 177 auf. Somit fällt kaum überschüssiges Material an, das System ist einfacher handhabbar und ergibt eine grosse Zeitersparnis gegenüber den bekannten Lösungen. Die Stärke der anpassbaren Ausgleichsschicht 184 ist derart gewählt, dass die gleiche Stärke der Ausgleichsschicht 184 bei unterschiedlich grossen Zähnen die Differenz zwischen der Kontaktfläche 178 der Klebebasis 177 und der Zahnoberfläche 183 des Zahns 182 ausgleicht und beim Kleben und Anpassen des Clips 171 diese Differenz mit etwas Druck ausgeglichen sowie der Clip 171 ausgerichtet werden kann.

Die Zahnoberfläche 183 wird bevorzugt vor dem Befestigen des Clips 171 am Zahn 182 vorbehandelt (angeätzt, sand-, oxid- oder salzgestrahlt). Damit wird eine poröse Zahnoberfläche 183 geschaffen, an welcher der Kleber 186 besser haftet. Der Kleber 186 ist z. B. eine dünne Lack- oder Klebeschicht, die vor dem definitiven Versetzen des Clips 171 auf die Zahnoberfläche 183 und die dem Zahn 182 zugewandten Fläche der anpassbaren Ausgleichsschicht 184 aufgebracht wird, beispielsweise aufgepinselt. Anschliessend wird der vorfabrizierte Clip 171 mit der bereits an der Basis 173 angebrachten Klebebasis 177 und mit der an der Klebebasis 177 angebrachten Ausgleichsschicht 184 durch leichtes Pressen am Zahn 182 angepasst, beispielsweise durch Lichtpolymerisation befestigt, wobei mehrere, einzeln vorhandene, lichthärtende Komponenten unter Umständen gleichzeitig ausgehärtet werden. Um den Abstand des Clips 171 zur Incisialkante des Zahns 182 möglichst gleichmässig zu halten und den Clip 171 während der Positionierung nicht mit den Fingern halten zu müssen, kann ein - hier nicht dargestellter - Klebedistanzhalter beziehungsweise eine Positionierhilfe verwendet werden. Diese werden beispielsweise vorgängig in den Clip 171 gesteckt und weisen eine Messvorrichtung oder einen Distanzhalter auf, um den Clip 171 in einem gleichmässigen beziehungsweise bestimmten Abstand zu einer der Aussenkanten des Zahns 182 positioniert zu befestigen.

Die zuvor beschriebene Anordnung des Clips 171 am Zahn 182 ist einfacher und kostengünstiger als die bisher bekannten Lösungen, bei denen mit einer Tube oder Spritze ein Kleber auf die Basis eines Brackets aufgebracht, anschliessend auf den Zahn geklebt und dann die Klebeverbindung mit Licht gehärtet wurde. Auch in zahntechnischen Labors wird das bekannte Verfahren zur Herstellung von Vorrichtungen zur Korrektur von Zähnen verwendet.

Mit der erfindungsgemässen Vorrichtung ergeben sich wesentliche Vorteile gegenüber den bisher bekannten Lösungen. Beim Befestigen des Clips 171 am Zahn 182 ergibt sich ein geringerer Kleberüberfluss, wenn der Clip 171 an die Zahnoberfläche 183 gedrückt wird.

Es wird teures Klebematerial eingespart. Zusätzlich dringt kaum Klebematerial in die Aufnahme 175 des Clips 171, weshalb die Montage bzw. Demontage des darin eingesetzten oder einzusetzenden Anschlusselements gewährleistet ist. Zusätzlich ergibt sich eine nicht zu unterschätzende Zeitersparnis beim Zahnarzt beziehungsweise beim Kieferorthopäden, was sich auf die Kosten für die Korrekturvorrichtung positiv auswirkt.

Figur 27 stellt eine Draufsicht der Halterung (Clip 171) dar. Im Zentrum der Basis 173 ist die Vertiefung 176 ausgeformt. Weiter sind die an der Basis 173 seitlich vorhandenen Arretierungen 174.1 bzw. 174.2 in dieser Darstellung erkennbar, welche ein seitliches Herausgleiten des eingeklickten Anschlusselements verhindern und gleichzeitig als Positionierungshilfe dienen. Die Arretierungen 174.1 bzw. 174.2 sind vorzugsweise leicht geneigt und schliessen jeweils mit der Basis 173 einen Winkel von weniger als 90° ein. Die Einkerbung 188.1 in der Arretierung 174.1 und die Einkerbung 188.2 in der Arretierung 174.2 dienen als Entfernungshilfe zum Entfernen des eingeklickten - hier nicht dargestellten - Anschlusselements aus dem Clip 171, beispielsweise mit einer Zange, Pinzette oder einem anderen geeigneten Hilfsmittel.

Die Seitenwände 172.1 und 172.2 weisen am Anfang und am Ende ihres freien Randes leichte Abschrägungen 189.1 und 189.2 bzw. 189.3 und 189.4 auf, welche die Positionierung des Anschlusselements vor dem Eindrücken des Anschlusselements in den Clip 171 erleichtern und die Anschlusselemente im eingeklickten Zustand zusätzlich gegen ein unerwünschtes Herausgleiten aus dem Clip 171 sichern.

Figur 28 zeigt eine Seitenansicht der in Figur 27 gezeigten Halterung (Clip 171). An der Basis 173 ist die Vertiefung 176 erkennbar. Weiter sind die leichten Abschrägungen 189.1 und 189.2 ersichtlich, welche am freien Rand 190 der Seitenwand 172.1 angeordnet sind und über den freien Rand 190 leicht vorstehen.

Bei grösseren Clips (z. B. bei Clips, welche an den Molaren befestigt werden) können mehrere (zumindest zwei) Vertiefungen ausgebildet werden. In der Figur 29 ist in einer Draufsicht eine solche Halterung dargestellt. Der Clip 190 entspricht bezüglich seiner konstruktiven Ausbildung im Wesentlichen dem in den Figuren 26, 27 und 28 beschriebenen Clip 171. Der annähernd U-förmige Clip 190 hat eine Basis 192, an deren freien Enden die Arretierungen 193.1 bzw. 193.2 ausgebildet sind, und zwei Seitenwände 194.1 und 194.2, welche bevorzugt die gleiche konvexe Ausgestaltung wie die Seitenwände 172.1 bzw. 172.2 des Clips 171 aufweisen. Damit können im Querschnitt gleich ausgebildete Anschlusselemente im Clip 171 sowie 190 verwendet werden, einzig mit dem Unterschied, dass die Anschlusselemente für den Clip 190 eine längere, entsprechend der Länge der Aufnahme des Clips 190 ausgebildete, Abmessung als die Anschlusselemente für den Clip 171 aufweisen. Weiter haben auch die Seitenwände 194.1 und 194.2 an ihren freien Rändern, analog zu den Seitenwänden 172.1 und 172.2 des Clips 171, flache Abschrägungen 196.1 und 196.2 bzw. 196.3 und 196.4.

In der Basis 192 sind zwei Vertiefungen 195.1 und 195.2 ausgebildet, welche in entsprechende Vertiefungen einer - hier nicht dargestellten - Klebebasis eingreifen und funktionell die gleichen Aufgaben wie die Vertiefung 176 beim Clip 171 erfüllen. Die Arretierungen 193.1 und 193.2 sind analog den Arretierungen 174.1 und 174.2 ausgebildet und weisen wie diese Einkerbungen 197.1 und 197.2 zur Entnahme eines eingeklickten Anschlusselements aus dem Clip 190 auf.

Die Anschlusselemente können in einer weiteren Ausführungsform mit Haken versehen sein an denen z. B. eine intermaxilläre Fixation (Verschnürung) zur zeitweiligen Verblockung des Unterkiefers mit dem Oberkiefer angebracht werden kann, beispielsweise mit der Multibandtechnik. Die Anschlusselemente werden dabei mit Drähten oder Gummizügen verbunden oder verschnürt.

Weiter können auch Teilprothesen an einer erfindungsgemässen Vorrichtung fixiert werden. Insbesondere in einem teilbezahnten Kiefer, bei dem sich die Prothese an den verbliebenen Zähnen abstützt und so ein besseres Beissgefühl schafft, bietet sich diese Art der Befestigung an. Ein weiteres Anwendungsbeispiel findet sich bei den so genannten Brücken, welche einzelne fehlende Zähne ersetzen. Weiter können ein- und zweiarmige Klammern an den Anschlusselementen befestigt werden.

Zusammenfassend ist festzustellen, dass eine einfach anwendbare Vorrichtung geschaffen wurde, mit welcher die meisten Anwendungen der Orthodontie fixiert werden können. Neben Endprodukten können auch standardisierte Halbfabrikate verwendet werden, welche durch einen Zahnarzt direkt am Patienten angepasst werden können. Durch die erfindungsgemässe Vorrichtung lassen sich die Kosten für die Patienten und die Krankenkassen in der Orthodontie gegenüber den bisher bekannten Lösungen wesentlich reduzieren.

## Patentansprüche

1. Vorrichtung für die Orthodontie mit zumindest einem Mittel **(24; 28, 29; 33, 42, 46, 49, 51, 52, 55, 56, 63, 64, 67; 83; 84, 88, 93, 104, 106, 108, 110, 112, 143, 153, 158, 165)** zur Korrektur, einem Anschlusselement **(7; 8; 9; 30; 66; 77; 132)** und einer Halterung **(1; 26; 27; 68; 73; 101; 120; 171; 133)**, wobei das Mittel (24; 28, 29; 33, 42, 46, 49, **51, 52, 55, 56, 63, 64, 67; 83; 84, 88, 93, 104, 106, 108, 110, 112, 143, 153, 158, 165)** zur Korrektur am Anschlusselement **(7; 8; 9; 30; 66; 77; 123; 132)** gehalten ist und das Anschlusselement **(7; 8; 9; 30; 66; 77; 123; 132)** seinerseits an der Halterung **(1; 26; 27; 68; 73; 101; 120; 133; 171)** fixierbar ist, **gekennzeichnet durch** ein Abdeckelement **(123; 134),** welches über dem zumindest teilweise in der Halterung **(1; 26; 27; 68; 73; 101; 120; 133; 171)** fixierten Anschlusselement **(7; 8; 9; 30; 77; 123; 132)** angeordnet ist.

2. Vorrichtung nach Anspruch 1, **dadurch gekennzeichnet, dass** sie mehrere Mittel **(24; 28, 29; 33, 42, 46, 49, 51, 52, 55, 56, 63, 64, 67; 83; 84, 88, 93, 104, 106, 108, 110, 112, 143, 153, 158, 165)** zur Korrektur, mehrere Anschlusselemente **(7; 8; 9; 30; 66; 77; 123; 132)** und mehrere Halterungen **(1; 26; 27; 68; 73; 101; 120; 133; 171)** hat, und dass die Mittel **(24; 28, 29; 33, 42, 46, 49, 51, 52, 55, 56, 63, 64, 67; 83; 84, 88, 93, 104, 106, 108, 110, 112, 143, 153, 158, 165)** zur Korrektur an den Anschlusselementen **(7; 8; 9; 66; 77; 132)** gehalten sind, und dass die Anschlusselemente **(7; 8; 9; 30; 66; 77; 123; 132)** ihrerseits an den Halterungen **(1; 26; 27; 68; 73; 101; 120; 133; 171)** fixierbar sind.

3. Vorrichtung nach einem der Ansprüche 1 oder 2, **dadurch gekennzeichnet, dass** das Anschlusselement **(7; 8; 9; 66; 77; 123; 132)** lösbar an der Halterung **(1; 26; 27; 68; 73; 101; 120; 133; 171)** fixierbar ist.

4. Vorrichtung nach einem der Ansprüche 1 bis 3, **dadurch gekennzeichnet, dass** das Anschlusselement **(7; 8; 9; 30; 66; 77; 123; 132)** formschlüssig, vorzugsweise mit einer Klemmvorrichtung, an der Halterung **(1; 26; 27; 68; 73; 101; 120; 133; 171)** fixiert ist.

5. Vorrichtung nach einem der Ansprüche 1 bis 4, **dadurch gekennzeichnet, dass** die Halterung **(1; 26; 27; 68; 73; 101; 120; 133; 171)** U-förmig ist, wobei sie eine Basis **(2; 69; 74; 173)** und zwei gegenüberliegende Seitenwände **(3.1, 3.2; 70, 71; 75.1, 75.2; 172.1, 172.2)** umfasst.

6. Vorrichtung nach einem der Ansprüche 1 bis 5, **dadurch gekennzeichnet, dass** das Anschlusselement **(7; 8; 9; 30; 66; 77; 123; 132)** in der Halterung **(1; 26; 27; 68; 73; 101; 120; 133; 171)** einschnappend gehalten ist und das Abdeckelement **(123;134)** zur Verbesserung der Klemmwirkung bzw. der Verankerung des Anschlusselements **(7; 8; 9; 30; 66; 77; 123; 132)** in der Halterung **(1; 26; 27; 68; 73; 101; 120; 133; 171)** ausgebildet ist und insbesondere das Abdeckelement **(123; 134)** eine ästhetische Funktion hat, wobei zumindest die beim Öffnen des Mundes des Patienten visuell von aussen durch Dritte erkennbaren Flächen mit einer Beschichtung versehen sind, welche vorzugsweise auf die Zahnfarbe des Patienten abgestimmt sind.

7. Vorrichtung nach einem der Ansprüche 1 bis 6, **dadurch gekennzeichnet, dass** zumindest eine der Seitenwände **(3.1, 3.2; 71; 75.1, 75.2; 172.1, 172.2)** der Halterung **(1; 26; 27; 68; 73; 101; 120; 133; 171)** eine Ausbuchtung **(4.1, 4.2; 72)** und das Anschlusselement **(7; 8; 9; 30; 66; 77; 123; 132)** zumindest ein mit dieser Ausbuchtung **(4.1, 4.2; 72)** zusammenwirkendes Mittel **(12.1, 12.2; 13.1, 13.2; 15.1, 15.2; 78.1, 78.2)** aufweist.

8. Vorrichtung nach einem der Ansprüche 1 bis 7, **dadurch gekennzeichnet, dass** die Halterung **(1; 26; 27; 68; 73; 101; 120; 133; 171)** zur direkten Befestigung an einem Zahn **(20, 25, 36, 37, 38, 39, 59, 60, 79, 80, 81, 82, 89.2, 90.2, 102, 105, 119, 126, 131, 148, 149, 159, 160, 182)** vorgesehen, bzw. ausgebildet ist.

9. Vorrichtung nach einem der Ansprüche 1 bis 8, **dadurch gekennzeichnet, dass** das Anschlusselement **(7; 8; 9; 30; 66; 77; 123; 132)** als Übertragungselement ausgebildet und an der Halterung **(1; 26; 27; 68; 73; 101; 120; 133; 171)** fixierbar ist.

10. Vorrichtung nach Anspruch 5, **dadurch gekennzeichnet, dass** an der Basis **(2; 69; 74; 173)** in Längsrichtung der Halterung **(1; 26; 27; 68; 73; 101; 120; 133; 171)** Laschen **(6.1, 6.2)** angeordnet sind.

11. Vorrichtung nach Anspruch 5 oder 10, **dadurch gekennzeichnet, dass** an der Basis **(2)** zumindest ein Hakenteil **(5.1, 5.2)** angeordnet ist, an welchem beispielsweise eine Verschnürung befestigbar ist.

12. Vorrichtung nach einem der Ansprüche 1 bis 11, **dadurch gekennzeichnet, dass** die Bestandteile der Vorrichtung aus Metall hergestellt sind.

13. Vorrichtung nach einem der Ansprüche 1 bis 12, **dadurch gekennzeichnet, dass** das Anschlusselement **(7, 8, 9, 30, 66, 77, 132)** zumindest eine Öffnung **(10, 11.1, 11.2, 14.1, 14.2, 16, 17)** aufweist, in welcher ein Mittel **(24; 28, 29; 33, 42, 46, 49, 51, 52, 55, 56, 63, 64, 67; 83; 84, 88, 93, 104, 106, 108, 110, 112, 143, 153, 158, 165)** zur Korrektur befestigbar ist.

14. Vorrichtung nach einem der Ansprüche 1 bis 13, **dadurch gekennzeichnet, dass** das Mittel zur Korrektur ein gebogener Draht **(24, 29, 33, 42, 46, 49, 63, 64, 67, 93, 104, 106, 108, 110, 112, 143, 153, 158, 165)** oder ein Aufbiss **(28, 51, 52, 55, 56, 84, 88)** ist.

15. Vorrichtung nach einem der Ansprüche 1 bis 14, **dadurch gekennzeichnet, dass** das Mittel zur Korrektur einen Korrekturkörper **(106, 108, 110, 112)** und zwei Drahtanschlüsse **(107.1, 107.2, 111.1, 111.2, 113.1, 113.2)** zur Befestigung des Mittels **(24; 28, 29; 33, 42, 46, 49, 51, 52, 55, 56, 63, 64, 67; 83; 84, 88, 93, 104, 106, 108, 110, 112, 143, 153, 158,** 165) zur Korrektur an Anschlusselementen **(7; 8; 9; 30; 66; 77; 132)** aufweist.

16. Vorrichtung nach Anspruch 15, **dadurch gekennzeichnet, dass** der Korrekturkörper **(141, 156, 162)** aus verformbarem, vorzugsweise licht-härtendem Kunststoff **(142, 157, 163, 164)** hergestellt ist.

17. Vorrichtung nach Anspruch 15 oder 16, **dadurch gekennzeichnet, dass** der Korrekturkörper ein Thermodraht ist.

18. Vorrichtung nach einem der Ansprüche 1 bis 17, **gekennzeichnet durch** einen Aufbiss **(28, 84),** der zumindest zwei Schichten **(94, 32, 85, 86)** umfasst, wobei eine Schicht als Tragschicht **(94, 85)** und zumindest eine Schicht **(86; 32)** verformbar ist und nachträglich aushärtbar ist.

19. Vorrichtung nach einem der Ansprüche 1 bis 18, **dadurch gekennzeichnet, dass** die Halterung **(171)** einen Befestigungsbereich mit einer anpassbaren Schicht **(177, 184)** aufweist.

20. Vorrichtung nach Anspruch 19, **dadurch gekennzeichnet, dass** die Halterung **(171)** zwischen einer Basis **(173)** und der anpassbaren Schicht **(184)** ein Übergangsstück **(177)** hat.

21. Vorrichtung nach Anspruch 19 oder 20, **dadurch gekennzeichnet, dass** an der Basis **(173)** der Halterung **(171)** zumindest eine Vertiefung **(176)** ausgebildet ist, welche mit dem benachbarten Element **(177)** einen Kopplungsbereich gemäss einer Matrize/Patrize schafft.

## Claims

1. Orthodontic device having at least one correction means (24; 28, 29; 33, 42, 46, 49, 51, 52, 55, 56, 63, 64, 67; 83; 84, 88, 93, 104, 106, 108, 110, 112, 143, 153, 158, 165), a connection element (7; 8; 9; 30; 66; 77; 132) and a retaining device (1; 26; 27; 68; 73; 101; 120; 171; 133), the correction means (24; 28, 29; 33, 42, 46, 49, 51, 52, 55, 56, 63, 64, 67; 83; 84, 88, 93, 104, 106, 108, 110, 112, 143, 153, 158, 165) being retained on the connection element (7; 8; 9; 30; 66; 77; 123; 132) and the connection element (7; 8; 9; 30; 66; 77; 123; 132) itself being able to be fixed to the retaining device (1; 26; 27; 68; 73; 101; 120; 133; 171), **characterised by** a covering element (123; 134) which is arranged on the connection element (7; 8; 9; 30; 77; 123; 132) which is at least partially fixed in the retaining device (1; 26; 27; 68; 73; 101; 120; 133; 171).

2. Device according to claim 1, **characterised in that** it has a plurality of correction means (24; 28; 29; 33, 42, 46, 49, 51, 52, 55, 56, 63, 64, 67; 83; 84, 88, 93, 104, 106, 108, 110, 112, 143, 153, 158, 165), a plurality of connection elements (7; 8; 9; 30; 66; 77; 123; 132) and a plurality of retaining devices (1; 26; 27; 68; 73; 101; 120; 133; 171), and **in that** the correction means (24; 28; 29; 33, 42, 46, 49, 51, 52, 55, 56, 63, 64, 67; 83; 84, 88, 93, 104, 106, 108, 110, 112, 143, 153, 158, 165) are retained on the connection elements (7; 8; 9; 66; 77; 132) and **in that** the connection elements (7; 8; 9; 30; 66; 77; 123; 132) can themselves be fixed to the retaining devices (1; 26; 27; 68; 73; 101; 120; 133; 171).

3. Device according to either claim 1 or claim 2, **characterised in that** the connection element (7; 8; 9; 66; 77; 123; 132) can be detachably fixed to the retaining device (1; 26; 27; 68; 73; 101; 120; 133; 171).

4. Device according to any one of claims 1 to 3, **characterised in that** the connection element (7; 8; 9; 30; 66; 77; 123; 132) is fixed to the retaining device (1; 26; 27; 68; 73; 101; 120; 133; 171) in a positive-locking manner, preferably by means of a clamping device.

5. Device according to any one of claims 1 to 4, **characterised in that** the retaining device (1; 26; 27; 68; 73; 101; 120; 133; 171) is U-shaped, comprising a base (2; 69; 74; 173) and two opposing side walls (3.1, 3.2; 70, 71; 75.1, 75.2; 172.1, 172.2).

6. Device according to any one of claims 1 to 5, **characterised in that** the connection element (7; 8; 9; 30; 66; 77; 123; 132) is retained so as to snap-fit in the retaining device (1; 26; 27; 68; 73; 101; 120; 133; 171) and the covering element (123; 134) is constructed so as to improve the clamping effect or the anchoring of the connection element (7; 8; 9; 30; 66; 77; 123; 132) in the retaining device (1; 26; 27; 68; 73; 101; 120; 133; 171) and in particular the covering element (123; 134) has an aesthetic function, at least the faces which can be seen from the outer side by third parties when the patient opens his mouth being provided with a coating which is preferably adapted to the tooth colour of the patient.

7. Device according to any one of claims 1 to 6, **characterised in that** at least one of the side walls (3.1, 3.2; 71; 75.1, 75.2; 172.1, 172.2) of the retaining device (1; 26; 27; 68; 73; 101; 120; 133; 171) has a protuberance (4.1, 4.2; 72) and the connection element (7; 8; 9; 30; 66; 77; 123; 132) has at least one means (12.1, 12.2; 13.1, 13.2; 15.1, 15.2; 78.1, 78.2) which co-operates with this protuberance (4.1, 4.2; 72).

8. Device according to any one of claims 1 to 7, **characterised in that** the retaining device (1; 26; 27; 68; 73; 101; 120; 133; 171) is provided or constructed for being fixed directly to a tooth (20, 25, 36, 37, 38, 39, 59, 60, 79, 80, 81, 82, 89.2, 90.2, 102, 105, 119, 126, 131, 148, 149, 159, 160, 182).

9. Device according to any one of claims 1 to 8, **characterised in that** the connection element (7; 8; 9; 30; 66; 77; 123; 132) is constructed as a transition element and can be fixed to the retaining device (1; 26; 27; 68; 73; 101; 120; 133; 171).

10. Device according to claim 5, **characterised in that** flaps (6.1, 6.2) are arranged on the base (2; 69; 74; 173) in the longitudinal direction of the retaining device (1; 26; 27; 68; 73; 101; 120; 133; 171).

11. Device according to claim 5 or claim 10, **characterised in that** there is arranged, on the base (2), at least one hooked member (5.1, 5.2) on which, for example, a cord can be fixed.

12. Device according to any one of claims 1 to 11, **characterised in that** the components of the device are produced from metal.

13. Device according to any one of claims 1 to 12, **characterised in that** the connection element (7, 8, 9, 30, 66, 77, 132) has at least one opening (10, 11.1, 11.2, 14.1, 14.2, 16, 17) in which a correction means (24; 28, 29; 33, 42, 46, 49, 51, 52, 55, 56, 63, 64, 67; 83; 84, 88, 93, 104, 106, 108, 110, 112, 143, 153, 158, 165) can be fixed.

14. Device according to any one of claims 1 to 13, **characterised in that** the correction means is a bent wire (24, 29, 33, 42, 46, 49, 63, 64, 67, 93, 104, 106, 108, 110, 112, 143, 153, 158, 165) or an occlusal overlay (28, 51, 52, 55, 56, 84, 88).

15. Device according to any one of claims 1 to 14, **characterised in that** the means has a correction member (106, 108, 110, 112) and two wire connections (107.1, 107.2, 111.1, 111.2, 113.1, 113.2) for fixing the correction means (24; 28, 29; 33, 42, 46, 49, 51, 52, 55, 56, 63, 64, 67; 83; 84, 88, 93, 104, 106, 108, 110, 112, 143, 153, 158, 165) to connection elements (7; 8; 9; 30; 66; 77; 132).

16. Device according to claim 15, **characterised in that** the correction member (141, 156, 162) is produced from deformable, preferably light-hardening plastics material (142, 157, 163, 164).

17. Device according to claim 15 or 16, **characterised in that** the correction member is a thermowire.

18. Device according to any one of claims 1 to 17, **characterised by** an occlusal overlay (28, 84) which has at least two layers (94, 32, 85, 86), one layer being a carrier layer (94, 85) and at least one layer (86; 32) being able to be deformed and subsequently hardened.

19. Device according to any one of claims 1 to 18, **characterised in that** the retaining device (171) has a fixing region with an adaptable layer (177, 184).

20. Device according to claim 19, **characterised in that** the retaining device (171) has a transition piece (177) between a base (173) and the adaptable layer (184).

21. Device according to claim 19 or 20, **characterised in that** there is formed, on the base (173) of the retaining device (171), at least one recess (176) which forms with the adjacent element (177) a coupling region in the manner of a bottom die/top die.

## Revendications

1. Dispositif d'orthodontie avec au moins un moyen (24 ; 28, 29 ; 33, 42, 46, 49, 51, 52, 55, 56, 63, 64, 67 ; 83 ; 84, 88, 93, 104, 106, 108, 110, 112, 143, 153, 158, 165) de correction, un élément de liaison (7 ; 8 ; 9 ; 30 ; 66 ; 77 ; 132) et un support (1 ; 26 ; 27 ; 68 ; 73 ; 101 ; 120 ; 171 ; 133), dans lequel le moyen (24 ; 28, 29 ; 33, 42, 46, 49, 51, 52, 55, 56, 63, 64, 67 ; 83 ; 84, 88, 93, 104, 106, 108, 110, 112, 143, 153, 158, 165) de correction est maintenu sur l'élément de liaison (7 ; 8 ; 9 ; 30 ; 66 ; 77 ; 123 ; 132) et l'élément de liaison (7 ; 8 ; 9 ; 30 ; 66 ; 77 ; 123 ; 132) pour sa part peut être fixé sur le support (1 ; 26 ; 27 ; 68 ; 73 ; 101 ; 120 ; 133 ; 171), **caractérisé par** un élément de revêtement (123 ; 134), qui est disposé sur l'élément de liaison (7 ; 8 ; 9 ; 30 ; 77 ; 123 ; 132) fixé au moins en partie dans le support (1 ; 26 ; 27 ; 68 ; 73 ; 101 ; 120 ; 133 ; 171).

2. Dispositif selon la revendication 1, **caractérisé en ce qu'**il possède plusieurs moyens (24 ; 28, 29 ; 33, 42, 46, 49, 51, 52, 55, 56, 63, 64, 67 ; 83 ; 84, 88, 93, 104, 106, 108, 110, 112, 143, 153, 158, 165) de correction, plusieurs éléments de liaison (7 ; 8 ; 9 ; 30 ; 66 ; 77 ; 123 ; 132) et plusieurs supports (1 ; 26 ; 27 ; 68 ; 73 ; 101 ; 120 ; 133 ; 171), et **en ce que** les moyens (24 ; 28, 29 ; 33, 42, 46, 49, 51, 52, 55, 56, 63, 64, 67 ; 83 ; 84, 88, 93, 104, 106, 108, 110, 112, 143, 153, 158, 165) de correction sont maintenus sur l'élément de liaison (7 ; 8 ; 9 ; 66 ; 77 ; 132), et **en ce que** les éléments de liaison (7 ; 8 ; 9 ; 30 ; 66 ; 77 ; 123 ; 132) pour leur part peuvent être fixés sur les supports (1 ; 26 ; 27 ; 68 ; 73 ; 101 ; 120 ; 133 ; 171).

3. Dispositif selon l'une des revendications 1 ou 2, **caractérisé en ce que** l'élément de liaison (7 ; 8 ; 9 ; 66 ; 77 ; 123 ; 132) peut être fixé de manière amovible sur le support (1 ; 26 ; 27 ; 68 ; 73 ; 101 ; 120 ; 133 ; 171).

4. Dispositif selon l'une des revendications 1 à 3, **caractérisé en ce que** l'élément de liaison (7 ; 8 ; 9 ; 30 ; 66 ; 77 ; 123 ; 132) est fixé par complémentarité de forme, de préférence avec un dispositif de serrage, sur le support (1 ; 26 ; 27 ; 68 ; 73 ; 101 ; 120 ; 133 ; 171).

5. Dispositif selon l'une des revendications 1 à 4, **caractérisé en ce que** le support (1 ; 26 ; 27 ; 68 ; 73 ; 101 ; 120 ; 133 ; 171) est en forme de U, sachant qu'il comprend une base (2 ; 69 ; 74 ; 173) et deux parois latérales opposées (3.1, 3.2 ; 70, 71 ; 75.1, 75.2 ; 172.1, 172.2).

6. Dispositif selon l'une des revendications 1 à 5, **caractérisé en ce que** l'élément de liaison (7 ; 8 ; 9 ; 30 ; 66 ; 77 ; 123 ; 132) est maintenu par enclenchement dans le support (1 ; 26 ; 27 ; 68 ; 73 ; 101 ; 120 ; 133 ; 171) et l'élément de revêtement (123 ; 134) est conçu pour améliorer l'action de serrage et/ou d'ancrage de l'élément de liaison (7 ; 8 ; 9 ; 30 ; 66 ; 77 ; 123 ; 132) dans le support (1 ; 26 ; 27 ; 68 ; 73 ; 101 ; 120 ; 133 ; 171) et en particulier l'élément de revêtement (123 ; 134) possède une fonction esthétique, au moins les surfaces visibles de l'extérieur par un tiers lors de l'ouverture de bouche du patient étant prévues avec un revêtement tel qu'elles sont harmonisées de préférence avec la couleur des dents du patient,

7. Dispositif selon l'une des revendications 1 à 6, **caractérisé en ce qu'**au moins une des parois latérales (3.1, 3.2 ; 71 ; 75.1, 75.2 ; 172.1, 172.2) du support (1 ; 26 ; 27 ; 68 ; 73 ; 101 ; 120 ; 133 ; 171) comprend une indentation (4.1, 4.2 ; 72) et l'élément de liaison (7 ; 8 ; 9 ; 30 ; 66 ; 77 ; 123 ; 132) au moins un moyen (12.1, 12.2 ; 13.1, 13.2 ; 15.1, 15.2 ; 78.1, 78.2) coopérant avec cette indentation (4.1, 4.2 ; 72).

8. Dispositif selon l'une des revendications 1 à 7, **caractérisé en ce que** le support (1 ; 26 ; 27 ; 68 ; 73 ; 101 ; 120 ; 133 ; 171) est prévu et/ou conçu pour être fixé directement sur une dent (20, 25, 36, 37, 38, 39, 59, 60, 79, 80, 81, 82, 89.2, 90.2, 102, 105, 119, 126, 131, 148, 149, 159, 160, 182).

9. Dispositif selon l'une des revendications 1 à 8, **caractérisé en ce que** l'élément de liaison (7 ; 8 ; 9 ; 30 ; 66 ; 77 ; 123 ; 132) est conçu en tant qu'un élément de transmission et peut être fixé sur le support (1 ; 26 ; 27 ; 68 ; 73 ; 101 ; 120 ; 133 ; 171).

10. Dispositif selon la revendication 5, **caractérisé en ce que** des attaches (6.1, 6.2) sont disposées sur la base (2 ; 69 ; 74 ; 173) dans le sens de la longueur du support (1;26;27;68;73;101;120;133;171).

11. Dispositif selon la revendication 5 ou 10, **caractérisé en ce qu'**au moins une partie de crochet (5.1, 5.2) est disposée sur la base (2), à laquelle un laçage peut par exemple être fixé.

12. Dispositif selon l'une des revendications 1 à 11, **caractérisé en ce que** les composants du dispositif sont fabriqués en métal.

13. Dispositif selon l'une des revendications 1 à 12 , **caractérisé en ce que** l'élément de liaison (7, 8, 9, 30, 66, 77, 132) comprend au moins une ouverture (10, 11.1, 11.2, 14.1, 14.2, 16, 17), dans laquelle un moyen (24 ; 28, 29 ; 33, 42, 46, 49, 51, 52, 55, 56, 63, 64, 67 ; 83 ; 84, 88, 93, 104, 106, 108, 110, 112, 143, 153, 158, 165) de correction peut être fixé.

14. Dispositif selon l'une des revendications 1 à 13 , **caractérisé en ce que** le moyen de correction est un fil courbé (24, 29, 33, 42, 46, 49, 63, 64, 67, 93, 104, 106, 108, 110, 112, 143, 153,158, 165) ou une aile d'occlusion (28, 51, 52, 55, 56, 84, 88).

15. Dispositif selon l'une des revendications 1 à 14, **caractérisé en ce que** le moyen de correction comprend un corps de correction (106, 108, 110, 112) et deux raccordements métalliques (107.1, 107.2, 111.1, 111.2, 113.1, 113.2) servant à fixer le moyen (24 ; 28, 29 ; 33, 42, 46, 49, 51, 52, 55, 56, 63, 64, 67 ; 83 ; 84, 88, 93, 104, 106, 108, 110, 112, 143, 153, 158, 165) de correction sur des éléments de liaison (7 ; 8 ; 9 ; 30 ; 66 ; 77 ; 132).

16. Dispositif selon la revendication 15, **caractérisé en ce que** le corps de correction (141, 156, 162) est fabriqué en matière synthétique malléable, de préférence photopolymérisable (142, 157, 163,164).

17. Dispositif selon la revendication 15 ou 16, **caractérisé en ce que** le corps de correction est un fil thermique.

18. Dispositif selon l'une des revendications 1 à 17, **caractérisé par** une aile d'occlusion (28, 84) qui comprend au moins deux couches (94, 32, 85, 86), une couche servant de couche porteuse (94, 85) et au moins une couche (86 ; 32) étant malléable et pouvant ensuite être durcie.

19. Dispositif selon l'une des revendications 1 à 18, **caractérisé en ce que** le support (171) comprend un secteur de fixation avec une couche adaptable (177, 184).

20. Dispositif selon la revendication 19, **caractérisé en ce que** le support (171) possède une pièce de raccordement (177) entre une base (173) et la couche (184) adaptable.

21. Dispositif selon la revendication 19 ou 20, **caractérisé en ce qu'**à la base (173) du support (171) est formé au moins un évidement (176) qui crée avec l'élément adjacent (177) un secteur de raccord du type matrice/poinçon.
